# EUROPEAN PATENT SPECIFICATION

(11) **EP 4 305 912 B1**
(45) Date of publication and mention of the grant of the patent: **24.06.2026**
(21) Application number: 22713926.8
(22) Date of filing: 10.03.2022
(51) Int. Cl.: H04W 72/21

(54) **SCHEDULING TECHNIQUE**
PLANUNGSTECHNIK
TECHNIQUE DE PLANIFICATION

(30) Priority: 12.03.2021 US 202163160076 P
(43) Date of publication of application: 17.01.2024
(73) Proprietor: Telefonaktiebolaget LM Ericsson (publ), 164 83 Stockholm (SE)
(72) Inventor: WANG, Min, 977 53 LULEÅ (SE); WÄNSTEDT, Stefan, 972 51 LULEÅ (SE); CHRISTOFFERSSON, Jan, 975 61 LULEÅ (SE); SINGH, Bikramjit, 02880 KIRKKONUMMI (FI)
(74) Representative: Ericsson
(86) International application number: PCT/EP2022/056263
(87) International publication number: WO 2022/189596

(56) References cited:
- WO-A1-2018/232259
- US-A1- 2018 270 699

## Description

### Technical Field

The present disclosure relates to a technique for scheduling a radio resource by a network node for a radio device. More specifically, and without limitation, methods and devices are provided for reporting a queueing delay of data available for transmission at a radio device to a network node for scheduling the radio device.

### Background

The Third Generation Partnership Project (3GPP) specifies radio access technologies (RATs) that use one or more network nodes for scheduling radio devices such as user equipments (UEs). Scheduling is a mechanism comprising a radio device asking the network node (e.g., a base station) for resource allocation during any Transmission Time Interval (TTI). If the radio device has some data that it needs to transmit, it will request the network node for the resource allocation. From the perspective of the network node, the scheduling comprises selecting which radio device will use the radio resources at each TTI.

Conventionally, the availability of the data to be transmitted is indicated to the network node by means of a buffer status report (BSR) and a scheduling request (SR). Based on the conventionally provided indications, the network node decides upon the scheduling of the radio resources. As the scheduling decision has to be made sufficiently in advance of the actual transmission on the scheduled radio resources, the scheduling decision can be inaccurate, since the radio device may not be able to report the buffer status frequently enough to enable the network node to base its scheduling decision on the evolution of the buffer status at the radio device.

Document US 2018/0270699 A1 discloses a buffer status reporting procedure in a wireless network which may be transmitted to a base station.

Document WO 2018/232259 A1 discloses features, methods, and functions for beam failure recovery and scheduling requests. The scheduling request may be designed to accommodate new criteria for transmission on a grant-free uplink shared channel (UL-SCH) and for putting the schedule request on hold.

### Summary

Accordingly, there is a need for a technique that enables the network node to more accurately schedule radio resources in at least some scenarios.

As to a first method aspect, a method of reporting a queueing delay of data available for transmission at a radio device to a network node of a radio access network (RAN) is provided. The RAN provides radio access to the radio device. The method comprises or initiates a step of transmitting a control message from the radio device to the network node. The control message is indicative of the queueing delay of the data available for the transmission at the radio device. The method further comprises or initiates a step of receiving a scheduling grant depending on the queueing delay from the network node. The scheduling grant is indicative of a radio resource for the transmission of the available data.

The method may further comprise or initiate an optional step of transmitting the data using the radio resource indicated in the scheduling grant.

By reporting (i.e., by transmitting an indicator of) the queueing delay of the data available at the radio device to the network node, which is providing radio access to the radio device, the scheduling grant received from the network node takes the reported queueing delay into account when granting the radio resource for the transmission of the available data. For example, the technique can be implemented to fulfil a packet delay budget (PDB) for a packet comprising the available data (e.g., for time-sensitive networking, TSN) and/or to fulfil a configured quality of service (QoS) associated with the available data (e.g., for a QoS flow). As a further or alternative example, when the network node has no knowledge of the evolution of the buffer status at the radio device (for example after initial radio access), by indicating the queueing delay, the network node can take the age of the available data into account even if the radio device is unable to report the buffer status frequently enough to infer the age of the data from the buffer status reports.

The queueing delay may be part of, or included in, a buffer status of a buffer (i.e., a queue) storing the data available for the transmission at the radio device. The reporting of the queueing delay (i.e., the transmitting of the control message indicative of the queueing delay) may be part of, or included in, a buffering status reporting.

Indicating the queueing delay can be particularly valuable in the evolution of Fifth Generation (5G) radio access technology (RAT) and/or in the era of Sixth Generation (6G) RAT, e.g., since estimating the queueing delay at the network node may be not sufficiently accurate for 5G RAT or 6G RAT.

The queueing delay may also be referred to as queueing latency.

The queueing delay may relate to uplink (UL) data available at the radio device for the transmission to the network node. Alternatively or in addition, the queueing delay may relate to sidelink (SL) data available at the radio device for the transmission to another radio device.

The data available at the radio device may also be referred to as pending data. The available data may be pending for uplink (UL) transmission or sidelink (SL) transmission.

The queueing delay may be indicated in terms of slots, subframes, and/or transmission time intervals (TTls) of the RAN. Herein, referring to alternatives A; B; and/or C as well as referring to at least one of A; B; and C may encompass any one of A, B, C as well as any combination (i.e., subset) thereof.

Without the indication of the queueing delay according to the technique, particularly for the 5G RAT or the 6G RAT, estimating the buffer status and/or the queueing delay of the radio device may be difficult for the network node (e.g., a gNB), e.g., since the radio device (e.g., a UE) may be scheduled with multiple TTIs and/or slots at a time. For example, as a subcarrier spacing (SCS) is increased, the time for scheduling the radio device and/or the time for processing the data at the radio device may increase in numbers of slots or TTIs, e.g., up to 30 to 50 slots.

The control message may be indicative of the queueing delay of the available data per logical channel (LCH), or per LCH group (LCG).

The transmitting of the control message may comprise transmitting a control protocol data unit (PDU) of a protocol layer in a protocol stack for the radio access in the RAN. Alternatively or in addition, the transmitting of the control message may comprise or use at least one (e.g., any combination) of a radio resource control (RRC) information element (IE), a control PDU of a service data adaptation protocol (SDAP), a control PDU of a packet data convergence protocol (PDCP), a control PDU of a radio link control (RLC) layer, a medium access control (MAC) control element (CE), a signaling of a physical (PHY) layer, an uplink control information (UCI), an uplink message in a random access (RA) procedure or in a random access channel (RACH), e.g., a random access preamble (RAP).

The PHY layer may also be referred to as layer 1 (L1). The signaling of the PHY layer may also be referred to as an L1 signaling. Alternatively or in addition, the control message may be transmitted on a physical uplink control channel (PUCCH) of the RAN.

The RAP may also be referred to as a PRACH preamble. Alternatively or in addition, the RAP may also be referred to as Message 1 (Msg1) or Message A (MsgA). The RAP may be transmitted via a random access channel (RACH), e.g., a physical RACH (PRACH).

The transmitting of the control message may comprise transmitting a scheduling request (SR) and/or a buffer status report (BSR).

Alternatively or in addition, the radio device may use different dedicated RAPs (e.g., PRACH preambles) to indicate different queueing delay information to network node.

In case of the radio device performing a 4-step random access procedure, the transmitting of the control message may comprise transmitting a third message (Msg3) of the random access procedure, which is indicative of the queueing delay of the data available for the transmission at the radio device. Alternatively or in addition, in case of the radio device performing a 2-step random access procedure, the transmitting of the control message may comprise transmitting a message A (MsgA) of the random access procedure, which is indicative of the queueing delay of the data available for the transmission at the radio device.

A first message (i.e., the Msg1, the MsgA, or the RAP) of the random access procedure may indicate (e.g., announce) that the random access procedure is to report the queueing delay, a value of which is indicated by a later uplink message. For example, the RAP may only indicate that the random access is to report the queueing delay and that the detailed information (e.g., a value or range of the queueing delay) will be indicated in the Msg3 or the MsgA.

Indicators (e.g., the flag or field) indicating queueing delay may be included in Msg3 in case of 4-step RA or in MsgA in case of 2-step RA. The indicators may be carried in one or more MAC sub-headers. For example, a MAC sub-header of the Msg3 or the MsgA may be indicative of the queueing delay of the data available for the transmission at the radio device.

The transmitting of the control message may comprise transmitting a RAP from the radio device in a RACH occasion (RO) out of a set of ROs. Each of the ROs in the set may correspond to a different value or range of the queueing delay. A selection of the RO out of the set for the transmission may be indicative of the queueing delay.

The radio device may use different ROs to transmit the RAP to indicate different queueing delays of the available data to the network node. By means of the selection of the RO out of the set of ROs for the transmission of the RAP as the control message, the queueing delay may be indicated implicitly.

The control message may comprise a flag or a field that is indicative of the queueing delay. By means of the flag or the field, the queueing delay may be indicated explicitly. The field may comprise or represent one or more bits. The flag may be a field that comprises or represents one bit (1 bit).

A MAC sub-header for the Msg3 or MsgA may comprise the flag or the field that is indicative of the queueing delay. For example, the MAC sub-header may comprise an extension field (e.g., an E field) according to the 3GPP document TS 38.321, version 16.6.0, clause 6.2.2. Alternatively or in addition, the extension field may be a flag indicating if the MAC subPDU including this MAC subheader is the last MAC subPDU or not in the MAC PDU. The extension field may be set to "1" to indicate at least another MAC subPDU follows. The extension field is set to "0" to indicate that the MAC subPDU including this MAC subheader is the last MAC subPDU in the MAC PDU.

The transmitting of the control message may comprise transmitting, from the radio device, a first SR on a first SR radio resource out of a first set of SR radio resources and/or a second SR on a second SR radio resource out of a second set of SR radio resources. Optionally, each of the SR radio resources in the second set may correspond to a different value or range of the queueing delay. A selection of the second SR radio resource out of the second set may be indicative of the queueing delay.

The control message may comprise the second SR or the combination of the first SR and the second SR. By means of the selection of the SR radio resource out of the second set for the transmission of the second SR (e.g., as the control message), the queueing delay may be indicated implicitly.

Alternatively or in addition, the transmitting of the control message may comprise transmitting, from the radio device, a BSR on a BSR radio resource out of a set of BSR radio resources. Optionally, each of the BSR radio resources in the set may correspond to a different value or range of the queueing delay.

The BSR may be indicative of an associated LCH or LCG (e.g., associated with the data). Therefore, one set of BSR radio resources may be used for mapping different BSR radio resources to different queuing delays.

The correspondence between the (e.g., BSR or second SR) radio resources in the (e.g., second) set and the values or ranges of the queueing delay may also be referred to as a mapping (e.g., a mapping of the queueing delay to one of the BSR or SR radio resources).

The transmitting of the control message from the radio device may comprise transmitting at least one of the second SR and the BSR earlier than or prior to transmitting the first SR.

The first SR may be a conventional SR that is requesting the radio resource for the data, e.g., without indicating the queuing delay of the data.

The first SR may be transmitted consecutively to (e.g., directly subsequently to) the second SR. Alternatively or in addition, the first SR may be transmitted inconsecutively to (e.g., one or more TTls after) the second SR.

For example, the transmission may be consecutive if an orthogonal frequency division multiplexing (OFDM) symbol relating to the first SR follows directly after an OFDM symbol of, or relating to, at least one of the second SR and the BSR. As a further example, the transmission may be inconsecutive if the transmission of the first SR follows after a temporal gap after completion of at least one of the second SR and the BSR. The temporal gap may comprise at least one OFDM symbol.

Alternatively or in addition, the transmission of the first SR may temporally overlap with the transmission of the second SR. Optionally, the radio device may split a transmission power, which is used or is usable by the radio device for exclusively transmitting the first SR or the second SR, outside of the temporal overlap, for simultaneously transmitting the first SR, and the second SR during the temporal overlap.

The temporal overlap may comprise at slots, subframes, TTIs, and/or OFDM symbols relating to both the first SR and the second SR.

The transmitting of the control message may be periodic. That is, the control message may be periodically transmitted.

Alternatively or in addition, the transmitting of the control message may be triggered by an event. For example, the transmitting of the control message may be triggered when the data (e.g., for a LCH, which belongs to an LCG) becomes available to a MAC entity of the radio device. Alternatively or in addition, the transmitting of the control message may be triggered in conjunction with (e.g., only if) a requirement is fulfilled. The requirement may comprise that the data belongs to a LCH a priority of which is greater than any other LCH containing available data in the same LCG. Alternatively or in addition, the requirement may comprise that the data belongs to a LCH a priority of which is greater than a configured priority threshold. Alternatively or in addition, the requirement may comprise that no data is available for other LCHs in the same LCG. Alternatively or in addition, the requirement may comprise that the data is new data that has not been previously transmitted or the data is not to be retransmitted in the transmission.

Alternatively or in addition, the transmitting of the control message may be triggered when at least one LCH or LCG contains the data available for the transmission, which (e.g., LCH or LCG) has not been scheduled with any scheduling grant over a configured (e.g., predetermined) time period. Optionally, the configured time period may be different for different LCHs or LCGs, or the configured time period is a function of the priority of the LCH or the LCG.

Alternatively or in addition, the transmitting of the control message may be triggered when the available data belongs to a LCH a priority of which is greater than a configured (e.g., predetermined) priority threshold.

Alternatively or in addition, the transmitting of the control message may be triggered when the available data comprises multiple data packets in a queue at the radio device and the queueing delay of at least one of data packets in the queue is greater than a configured (e.g., predetermined) time period.

Alternatively or in addition, the transmitting of the control message may be triggered when the time elapsed since a last transmission of the control message and/or when the time elapsed between a last transmission of the control message and the availability of the data is greater than a configured (e.g., predetermined) threshold.

The transmitting of the control message may be triggered responsive to at least one of the events, e.g., responsive to a combination (e.g., of at least two) of the events. The above-mentioned when-conditions are examples of the events.

The transmitting of the control message may be triggered by receiving a request for the reporting of the queueing delay, e.g., from the network node and/or the RAN.

The method may further may comprise or initiate a step of receiving a dynamic scheduling grant for the control message. The control message may be transmitted on a radio resource indicated in the dynamic scheduling grant, optionally or additionally the radio resource indicated in the dynamic scheduling grant may be on the physical uplink shared channel (PUSCH) of the RAN.

The method may further comprise or initiate a step of receiving a configured grant (CG) for the control message. The control message may be transmitted on a radio resource granted according to the CG. The radio resource granted according to the CG may be shared among multiple radio devices served by the RAN. Optionally, the radio resource granted according to the CG may be on the PUSCH of the RAN.

The radio resources indicated in the dynamic scheduling grant or the radio resources indicated by the CG may be used exclusively for the control message. In that sense, the dynamic scheduling grant or the CG may be referred to as a small dynamic scheduling grant or a small CG.

As to a second method aspect, a method of scheduling a radio device depending on a queueing delay of data available for transmission at the radio device is provided. The method is performed by a network node of a RAN providing radio access to the radio device. The method comprises or initiates a step of receiving a control message from the radio device at the network node, the control message being indicative of the queueing delay of the data available for transmission at the radio device. The method further comprises or initiates a step of transmitting a scheduling grant depending on the queueing delay to the radio device, the scheduling grant being indicative of a radio resource for the transmission of the available data.

Optionally, the method may further comprise or initiate a step of receiving the data using the radio resource indicated in the scheduling grant.

The second method aspect may further comprise any feature and/or any step disclosed in the context of the first method aspect, or a feature and/or step corresponding thereto, e.g., a receiver counterpart to a transmitter feature or step.

As to another aspect, a computer program product is provided. The computer program product comprises program code portions for performing any one of the steps of the first and/or second method aspects disclosed herein when the computer program product is executed by one or more computing devices. The computer program product may be stored on a computer-readable recording medium. The computer program product may also be provided for download, e.g., via a radio network, the RAN, the Internet and/or a host computer. Alternatively, or in addition, the method may be encoded in a Field-Programmable Gate Array (FPGA) and/or an Application-Specific Integrated Circuit (ASIC), or the functionality may be provided for download by means of a hardware description language.

As to a first device aspect, a radio device for reporting a queueing delay of data available for transmission at the radio device to a network node of a RAN is provided. The RAN provides radio access to the radio device. The radio device comprises memory operable to store instructions and processing circuitry operable to execute the instructions, such that the radio device is operable to transmit a control message from the radio device to the network node. The control message is indicative of the queueing delay of the data available for the transmission at the radio device. The radio device is further operable to receive a scheduling grant depending on the queueing delay from the network node. The scheduling grant is indicative of a radio resource for the transmission of the available data.

The radio device may further be operable to perform any features and/or any step disclosed in the context of the first method aspect and the second method aspect or a feature and/or step corresponding thereto, e.g., a receiver counterpart to a transmitter feature or step.

As to a further first device aspect, a radio device for reporting a queueing delay of data available for transmission at the radio device to a network node of a RAN is provided. The RAN provides radio access to the radio device. The radio device is configured to transmit a control message from the radio device to the network node. The control message is indicative of the queueing delay of the data available for the transmission at the radio device. The radio device is further configured to receive a scheduling grant depending on the queueing delay from the network node. The scheduling grant is indicative of a radio resource for the transmission of the available data.

The radio device may further be configured to perform any features and/or any step disclosed in the context of the first method aspect and/or the second method aspect or a feature and/or step corresponding thereto, e.g., a receiver counterpart to a transmitter feature or step.

As to a still further first device aspect, a user equipment (UE) for reporting a queueing delay of data available for transmission at the UE to a base station of a RAN is provided. The RAN provides radio access to the UE. The UE is configured to communicate with the base station and comprises a radio interface and processing circuitry configured to transmit a control message from the UE to the base station. The control message is indicative of the queueing delay of the data available for the transmission at the UE. The radio interface and processing circuitry is further configured to receive a scheduling grant depending on the queueing delay from the base station. The scheduling grant is indicative of the radio resource for the transmission of the available data.

The processing circuitry may further be configured to execute any feature and/or any step disclosed in the context of the first method aspect and the second method aspect or a feature and/or step corresponding thereto, e.g., a receiver counterpart to a transmitter feature or step.

As to a second device aspect, a network node for scheduling a radio device depending on a queueing delay of data available for transmission at the radio device is provided. The network node comprises memory operable to store instructions and processing circuitry operable to execute the instructions, such that the network node is operable to receive a control message from the radio device at the network node. The control message is indicative of the queueing delay of the data available for transmission at the radio device. The network node is further operable to transmit a scheduling grant depending on the queueing delay to the radio device. The scheduling grant is indicative of the radio resource for the transmission of the available data.

The network node may further comprise any feature and/or may be operable to perform any step disclosed in the context of the second method aspect. Alternatively or in addition, the network node may comprise a feature and/or perform a step corresponding to the first method aspect, e.g., a receiver counterpart to a transmitter feature or step.

As to a further second device aspect, a network node for scheduling a radio device depending on a queueing delay of data available for transmission at the radio device is provided. The network node is configured to receive a control message from the radio device at the network node. The control message is indicative of the queueing delay of the data available for transmission at the radio device. The network node is further configured to transmit a scheduling grant depending on the queueing delay to the radio device. The scheduling grant is indicative of the radio resource for the transmission of the available data.

The network node may further be configured to perform any feature and/or any step disclosed in the context of the second method aspect. Alternatively or in addition, the network node may comprise a feature and/or be configured to perform a step corresponding to the first method aspect, e.g., a receiver counterpart to a transmitter feature or step.

As to a still further second device aspect, a base station for scheduling a UE depending on the queueing delay of data available for transmission at the UE is provided. The base station is configured to communicate with the UE and comprises a radio interface and processing circuitry configured to receive a control message from the radio device at the network node. The control message is indicative of the queueing delay of the data available for transmission at the radio device. The radio interface and processing circuitry is further configured to transmit a scheduling grant depending on the queueing delay to the radio device.

The scheduling grant is indicative of a radio resource for the transmission of the available data.

The radio interface and processing circuitry may be further configured to execute any feature and/or may comprise any step disclosed in the context of the second method aspect. Alternatively or in addition, the radio interface and processing circuitry of the base station may comprise a feature and/or may perform a step corresponding to the first method aspect, e.g., a receiver counterpart to a transmitter feature or step.

As to a still further aspect a communication system including a host computer is provided. The host computer comprises a processing circuitry configured to provide user data, e.g., included in the data available for transmission at the radio device (e.g., the UE). The host computer further comprises a communication interface configured to forward the user data to a cellular network (e.g., the RAN and/or the network node, e.g., the base station) for transmission to a UE.

A processing circuitry of the cellular network may be configured to execute any one of the steps of the second method aspect. Alternatively or in addition, the UE may comprise a radio interface and processing circuitry, which is configured to execute any one of the steps of the first method aspect.

The communication system may further include the UE. Alternatively, or in addition, the cellular network may further include one or more base stations configured for radio communication with the UE and/or to provide a data link between the UE and the host computer using the second method aspect.

The processing circuitry of the host computer may be configured to execute a host application, thereby providing the user data and/or any host computer functionality described herein. Alternatively, or in addition, the processing circuitry of the UE may be configured to execute a client application associated with the host application.

Any one of the devices (e.g., the UE), the network node (e.g., the base station), the communication system, or any node or station for embodying the technique, may further include any feature disclosed in the context of the method aspect, and *vice versa.* Particularly, any one of the units and modules disclosed herein may be configured to perform or initiate one or more of the steps of the method aspect.

In any one of the aspects, without limitation, for example in a 3GPP implementation, any "radio device" may be a user equipment (UE) and/or any network node may be a base station and/or may comprise a cell of the RAN. Any one of the method aspects may be embodied by a method of establishing a UE relaying connection with a desired QoS.

The technique may be applied in the context of 3GPP New Radio (NR) or 3GPP Long Term Evolution (LTE). At least some embodiments of the technique can ensure that the scheduling performed by the network node grants the radio resource to the radio device taking the QoS of the available data into account. For example, the scheduling grant may take the queueing delay of the data into account to fulfill a QoS associated with the data (e.g., according to a QoS flow).

The technique may be implemented in accordance with a 3GPP specification, e.g., for 3GPP release 17. The technique may be implemented for 3GPP LTE or 3GPP NR based on, or according to a modification of, the 3GPP document TS 38.321, version 16.3.0 and/or the 3GPP document TS 38.331, version 16.3.1.

Any radio device may be a user equipment (UE), e.g., according to a 3GPP specification.

The radio device and the network node of the RAN may be wirelessly connected in an uplink (UL) and/or a downlink (DL) through a Uu interface. Alternatively or in addition, the radio device may use the granted radio resource for a SL communication, i.e., a direct radio communication between the radio device and another radio device, optionally using a PC5 interface. Services provided using the SL or the PC5 interface may be referred to as proximity services (ProSe). Any radio device (e.g., the remote radio device and/or the relay radio device and/or the further radio device) supporting a SL may be referred to as ProSe-enabled radio device.

The remote radio device and/or the network node may form, or may be part of, a radio network, e.g., according to the Third Generation Partnership Project (3GPP) or according to the standard family IEEE 802.11 (Wi-Fi). The first method aspect and/or the second method aspect may be performed by one or more embodiments of the radio device (e.g., a UE) and the network node (e.g., a base station), respectively.

The RAN may comprise one or more network nodes (e.g., base stations), e.g., performing the second method aspect. Alternatively or in addition, the radio network may be a vehicular, *ad hoc* and/or mesh network comprising two or more radio devices, e.g., acting as the radio device and/or the further radio device.

Any of the radio devices may be a 3GPP user equipment (UE) or a Wi-Fi station (STA). The radio device may be a mobile or portable station, a device for machine-type communication (MTC), a device for narrowband Internet of Things (NB-loT) or a combination thereof. Examples for the UE and the mobile station include a mobile phone, a tablet computer and a self-driving vehicle. Examples for the portable station include a laptop computer and a television set. Examples for the MTC device or the NB-loT device include robots, sensors and/or actuators, e.g., in manufacturing, automotive communication and home automation. The MTC device or the NB-loT device may be implemented in a manufacturing plant, household appliances and consumer electronics.

Whenever referring to the RAN, the RAN may be implemented by one or more base stations.

The base station may encompass any station that is configured to provide radio access to any of the radio devices. The base stations may also be referred to as cell, transmission and reception point (TRP), radio access node or access point (AP). The base station and/or the relay radio device may provide a data link to a host computer providing the user data to the radio device or gathering user data (e.g., the available data) from the radio device. Examples for the base stations may include a 3G base station or Node B, 4G base station or eNodeB, a 5G base station or gNodeB, a Wi-Fi AP and a network controller (e.g., according to Bluetooth, ZigBee or Z-Wave).

The RAN may be implemented according to the Global System for Mobile Communications (GSM), the Universal Mobile Telecommunications System (UMTS), 3GPP Long Term Evolution (LTE) and/or 3GPP New Radio (NR).

Any aspect of the technique may be implemented on a Physical Layer (PHY), a Medium Access Control (MAC) layer, a Radio Link Control (RLC) layer, a packet data convergence protocol (PDCP) layer, and/or a Radio Resource Control (RRC) layer of a protocol stack for the radio communication.

### Brief Description of the Drawings

Further details of embodiments of the technique are described with reference to the enclosed drawings, wherein:
- Fig. 1: shows a schematic block diagram of an embodiment of a radio device for reporting a queueing delay and/or transmitting data to a network node;
- Fig. 2: shows a schematic block diagram of an embodiment of a network node for scheduling a radio device;
- Fig. 3: shows an example flowchart for method of reporting a queuing delay of data available at a radio device, which method may be implementable by the radio device of Fig. 1;
- Fig. 4: shows an example flowchart for method of scheduling a radio device, which method may be implementable by the network node of Fig. 2;
- Fig. 5: shows an example for mapping different queueing delays to different radio resources, which may be implementable by the radio device of Fig. 1 and the network node of Fig. 2;
- Fig. 6: shows an example for transmitting a control message according to a first embodiment;
- Fig. 7: shows an example for transmitting a control message according to a second embodiment;
- Fig. 8: shows an example for transmitting a control message according to a third embodiment;
- Fig. 9: shows a schematic signaling diagram resulting from embodiments of the radio device and the network node implementing the methods of Figs. 3 and 4, respectively, in the context of a 4-step random access procedure;

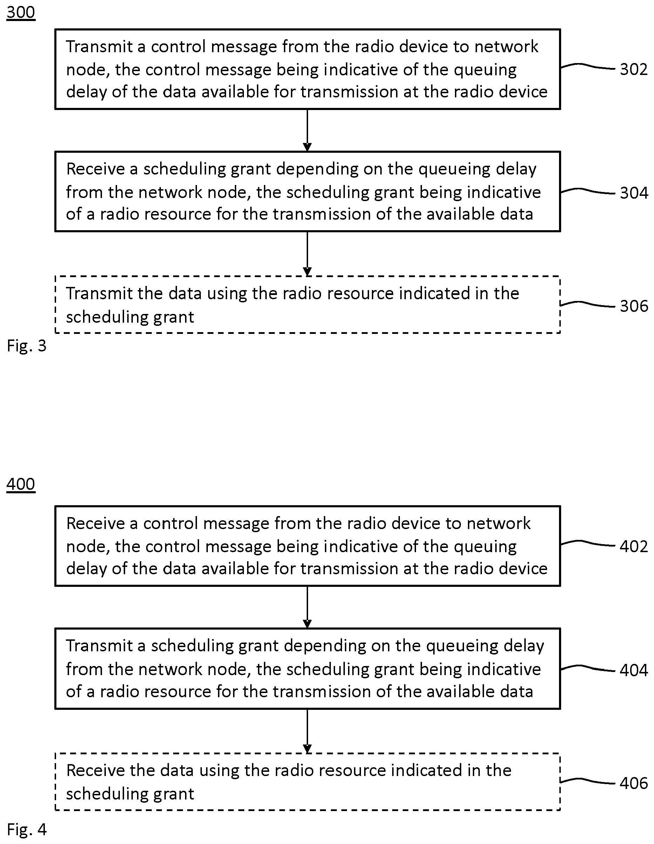

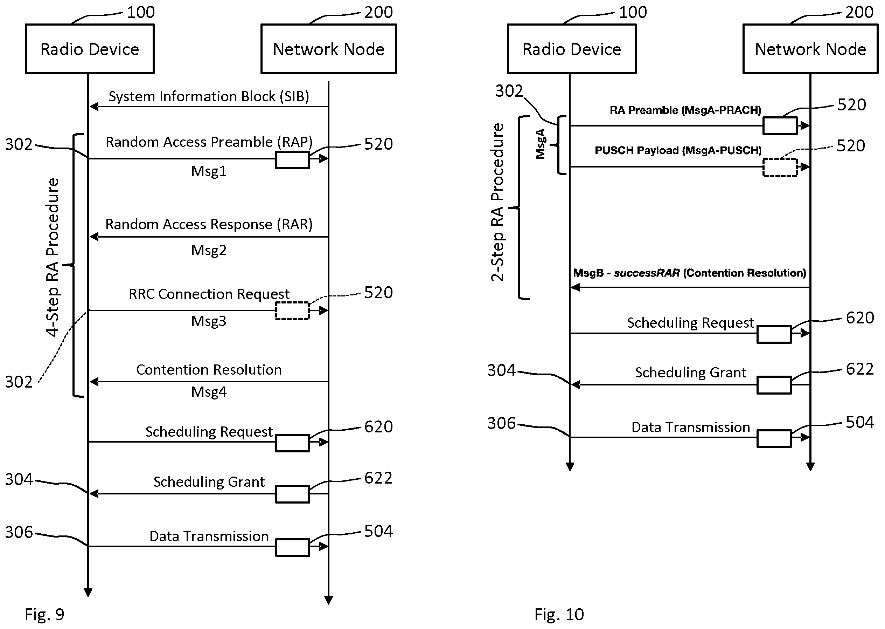

- Fig. 9: shows a schematic signaling diagram resulting from embodiments of the radio device and the network node implementing the methods of Figs. 3 and 4, respectively, in the context of a 2-step random access procedure;

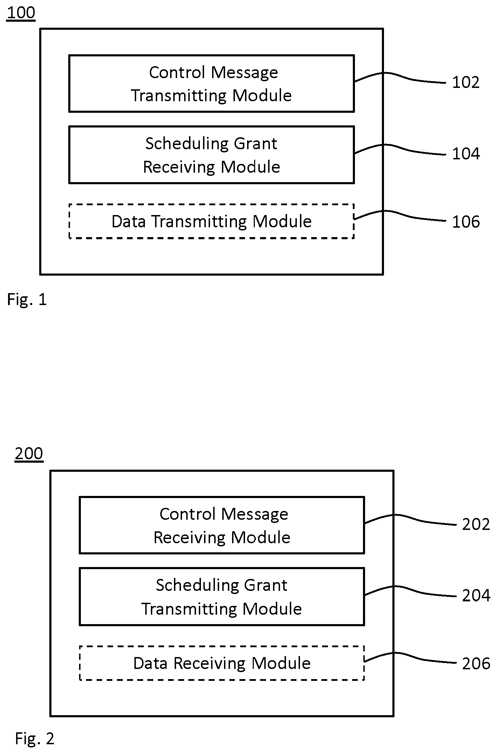

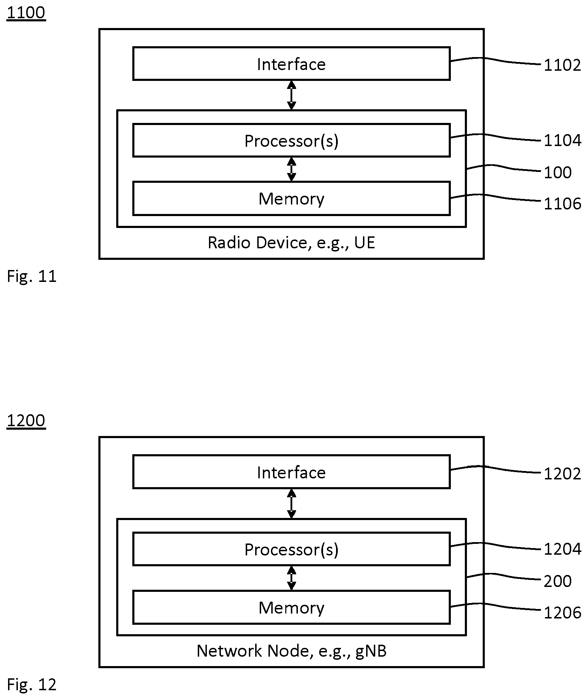

- Fig. 11: shows a schematic block diagram of a radio device embodying the device of Fig. 1;
- Fig. 12: shows a schematic block diagram of a network node embodying the device of Fig. 2;

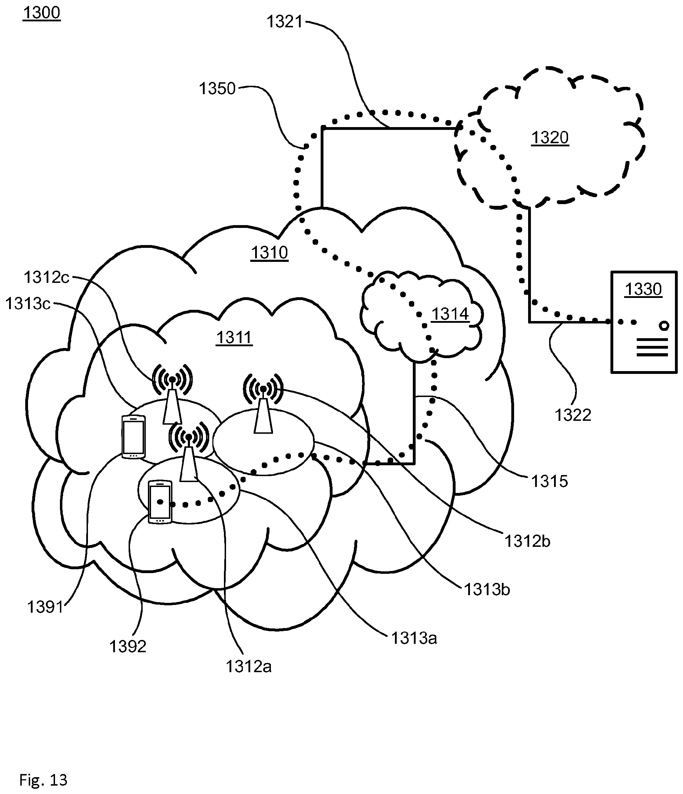

- Fig. 13: schematically illustrates an example telecommunication network connected via intermediate network to a host computer;

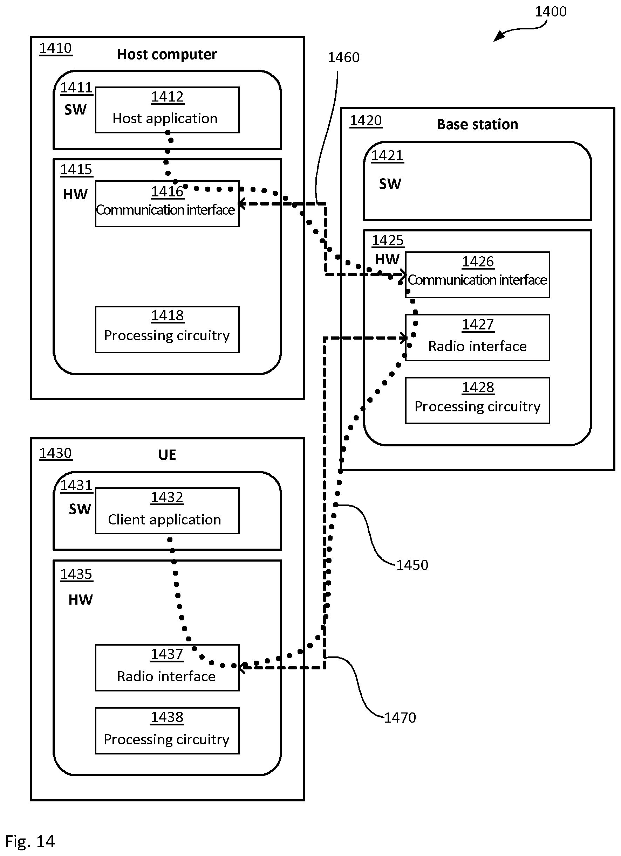

- Fig. 14: shows a generalized block diagram of a host computer communicating via a base station or radio device functioning as a gateway with a user equipment over a partially wireless connection; and

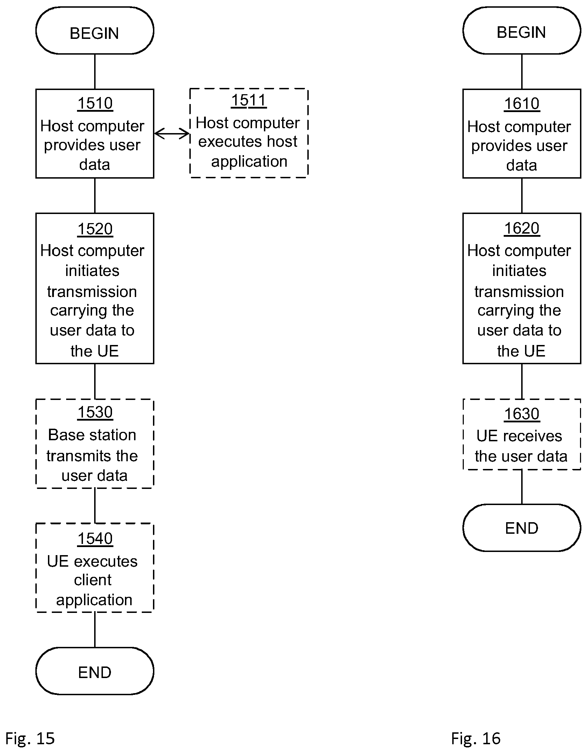

- Figs. 15 and 16: show flowcharts for methods implemented in a communication system including a host computer, a base station or radio device functioning as a gateway and a user equipment.

### Detailed Description

In the following description, for purposes of explanation and not limitation, specific details are set forth, such as a specific network environment in order to provide a thorough understanding of the technique disclosed herein. It will be apparent to one skilled in the art that the technique may be practiced in other embodiments that depart from these specific details. Moreover, while the following embodiments are primarily described for a New Radio (NR) or 5G implementation, it is readily apparent that the technique described herein may also be implemented for any other radio communication technique, including a Wireless Local Area Network (WLAN) implementation according to the standard family IEEE 802.11, 3GPP LTE (e.g., LTE-Advanced or a related radio access technique such as MulteFire), for Bluetooth according to the Bluetooth Special Interest Group (SIG), particularly Bluetooth Low Energy, Bluetooth Mesh Networking and Bluetooth broadcasting, for Z-Wave according to the Z-Wave Alliance or for ZigBee based on IEEE 802.15.4.

Moreover, those skilled in the art will appreciate that the functions, steps, units and modules explained herein may be implemented using software functioning in conjunction with a programmed microprocessor, an Application Specific Integrated Circuit (ASIC), a Field Programmable Gate Array (FPGA), a Digital Signal Processor (DSP) or a general purpose computer, e.g., including an Advanced RISC Machine (ARM). It will also be appreciated that, while the following embodiments are primarily described in context with methods and devices, the invention may also be embodied in a computer program product as well as in a system comprising at least one computer processor and memory coupled to the at least one processor, wherein the memory is encoded with one or more programs that may perform the functions and steps or implement the units and modules disclosed herein.

Fig. 1 schematically illustrates a block diagram of an embodiment of a device for reporting a queueing delay, e.g., according to the first device aspect. The device is generically referred to by reference sign 100.

The device 100 comprise a control message transmitting module 102 that transmits a control message (e.g., the control messages 520 and/or 620 described below) from a radio device (e.g., the device 100) to a network node (e.g., the network node 200 described below). The control message is indicative of a queuing delay (e.g., the queueing delay 502 described below) of a data available for transmission (e.g., the data 504 described below).

The device 100 further comprises a scheduling grant receiving module 104 that receives a scheduling grant (e.g., the scheduling grant 622 described below) depending on the queueing delay from the network node. The scheduling grant is indicative of a radio resource (e.g., the radio resource 624 described below) for the transmission of the available data.

Optionally, the device 100 further comprises a data transmitting module 106 that transmits the data using the radio resource indicated in the scheduling grant.

Any of the modules of the device 100 may be implemented by units configured to provide the corresponding functionality.

The modules 102 and 104 may be configured to perform steps 302 and 304, respectively, described below. The module 106 may be configured to perform the optional step (e.g., the step 306 described below) of the first method aspect.

The device 100 may also be referred to as, or may be embodied by, the radio device, e.g., a user equipment (UE). The radio device 100 and the network node of the RAN may be in radio communication.

Fig. 2 schematically illustrates a block diagram of an embodiment of a device for scheduling a radio device, e.g., according to the second device aspect. The device is generically referred to by reference sign 200.

The device 200 comprises a control message receiving module 202 that receives a control message (e.g., the control message 520 and/or 620 described below) from a radio device (e.g., the radio device 100) to a network node (e.g., the device 200). The control message is indicative of a queueing delay (e.g., the queueing delay 502 described below) of data (e.g., the data 504 described below) available for transmission at the radio device.

The device 200 further comprises a scheduling grant transmitting module 204 that transmits a scheduling grant (e.g., the scheduling grant 622 described below) depending on the queuing delay from the network node to the radio device. The scheduling grant is indicative of a radio resource (e.g., the radio resource 624 described below) for the transmission of the available data.

Optionally, the device 200 further comprises a module 206 that receives the data using the radio resource indicated in the scheduling grant.

Any of the modules of the device 200 may be implemented by units configured to provide the corresponding functionality.

The modules 202 and 204 may be configured to perform the steps 402 and 404, respectively, described below. The module 206 may be configured to perform the optional step (e.g., the step 406 described below) of the second method aspect.

The device 200 may also be referred to as, or may be embodied by, the network node, e.g., a base station. The network node 200 and the radio device (e.g., the radio device 100) may be in radio communication.

Each of the device 100 and the device 200 may be a radio device and a base station, respectively. Herein, any radio device may be a mobile or portable station and/or any radio device wirelessly connectable to the base station or the RAN, or to another radio device. For example, the radio device may be a user equipment (UE), a device for machine-type communication (MTC) or a device for (e.g., narrowband) Internet of Things (IoT). Two or more radio devices may be configured to wirelessly connect to each other, e.g., in an *ad hoc* radio network or via a 3GPP SL connection. Furthermore, any base station may be a station providing radio access, may be part of a radio access network (RAN) and/or may be a node connected to the RAN for controlling the radio access. For example, the base station may be an access point, for example a Wi-Fi access point.

Fig. 3 shows an example of a flowchart of a method 300 for reporting a queueing delay of data available for transmission at a radio device.

The radio device may be the radio device 100. The network node may be the network node 200. The queueing delay may be the queueing delay 502 described herein. The data may be the data 504 described herein. A control message may be the control message 520 described herein. The transmission may be the transmission 306 described herein. A scheduling grant may be the scheduling grant 622 described herein. A radio resource for the transmission may be the radio resource 624 described herein.

In a step 302, the control message 520 is transmitted from the radio device 100 to the network node 200. The control message 520 is indicative of the queueing delay 502 of the data 504 available for the transmission 306 at the radio device 100.

In a step 304, the scheduling grant 622, which depends on the queuing delay 502, is received from the network device 200 at the radio device 100. The scheduling grant 622 is indicative of the radio resource 624 for the transmission 306 of the data 504. For example, the scheduling grant 622 may depend on the queueing delay 502 in that the radio resource 624 indicated in the scheduling grant 622 depends on the queueing delay 502.

Optionally, in a step 306, the data 504 is transmitted from the radio device 100 using the radio resource 624 indicated in the scheduling grant 622. The data 504 may be transmitted to the network node 200 in an UL transmission or to another radio device in a SL transmission.

Fig. 4 shows an example of a flowchart for a method of scheduling a radio device depending on a queuing delay of data available for transmission at a radio device.

The radio device may be the radio device 100. The network node may be the network node 200. The queueing delay may be the queueing delay 502 described herein. The data may be the data 504 described herein. A control message may be the control message 520 described herein. The transmission may be the transmission 306 described herein. A scheduling grant may be the scheduling grant 622 described herein. A radio resource for the transmission may be the radio resource 624 described herein.

In a step 402, the control message 520 is received from the radio device 100 at the network node 200. The control message 520 is indicative of the queuing delay 502 of the data 504 available for transmission 306 at the radio device 100.

In a step 404, a scheduling grant 622, which depends on the queuing delay 502, is transmitted from the network device 200 to the radio device 100. The scheduling grant 622 is indicative of a radio resource 624 for the transmission 306 of the data 504. For example, the scheduling grant 622 may depend on the queueing delay 502 in that the radio resource 624 indicated in the scheduling grant 622 depends on the queueing delay 502.

Optionally, in a step 406, the data 504 is received, at the network node 200 or another radio device, on the radio resource 624 indicated in the scheduling grant 622.

Scheduling, e.g., as received in the first method aspect and/or as performed in the second method aspect, may be implemented as a process of allocating resources for the transmission 306 of the data 504. The scheduling may comprise the radio device 100 asking the network node 200 (e.g., a base station) for the resource allocation (i.e., the steps 304 and 404), e.g., during each Transmission Time Interval (TTI). If the radio device 100 has some data 504 that it needs to transmit continuously, it may request the network node 200, e.g. every TTI, for the resource allocation. This scheduling type may be referred to as a dynamic scheduling. The advantage of dynamic scheduling is flexibility and diversity of resource allocation. At the network node 200, the scheduling may comprise a selection of which radio device 100 will use the radio resources 624, e.g., at each TTI.

The scheduling grant 622 according to first and second method aspects may be dynamically scheduled or may be a configured grant (CG).

The radio device 100 may request uplink (UL) transmission resources 624 from the network node 200, by transmitting a scheduling request (SR). The SR conveys at least a single bit of information, indicating that the radio device 100 has data 504 to transmit 306 to the network node 200.

A scheduler in the network node 200 assigns the radio resource 624, which may comprise time and/or frequency resources, among radio devices served by the network node 200. A resource block (RB) is the smallest element that may be assigned by the scheduler. The scheduler may base its assignment decision (i.e., the scheduling) on information provided by the radio device 100. The provided information may comprise the queuing delay 502 of the data 504 to be transmitted in the step 306, and optionally at least one of channel conditions (e.g., at the radio device 100), a priority of the data or the radio device, and a buffer status reported from the radio device 100.

Transmissions 306 of the data 504 may be dynamically scheduled in each TTI, e.g., each subframe (SF). Therefore, the base station 200 transmits downlink assignments and/or uplink grants to certain radio devices 100 via downlink control information (DCI) on a physical downlink control channel (PDCCH).

For a service with very high bit rate, the abovementioned scheduling process including an SR and a grant for each TTI may lead to congestion. A remedy to such congestion may be a multi-TTI grant 622 that allows the network node 200 (e.g. an eNB or gNB) to provide multiple grants for a physical uplink shared channel (PUSCH), i.e., multiple resources 624, to the radio device 100 (e.g. a UE) using a single DCI in the step 304.

A bitmap field is included in the multi-grant DCI 622 indicating which slots and/or positions are assigned for initial transmissions 306 and which slots and/or positions are assigned for retransmissions. Separate modulation and coding schemes (MCSs) are signaled for the initial transmissions 306 and/or retransmissions. Each slot may be associated with different PUSCH mapping types.

One or multiple time-gap parameter are added in a table of a time domain resource assignment (TDRA). The TDRA table allows non-consecutive scheduling between slots. Alternatively, different K2 values are signaled for each slot. This allows the UE 100 to trigger a high priority SR if the allocated PUSCHs are not suitable for critical data 504.

The parameter K2 may denote the offset between the DL slot during which the PDCCH (i.e., the DCI 622) for UL scheduling is received and the UL slot 624 during which the UL data 504 needs to be transmitted 306 on the PUSCH.

In any aspect, the queueing delay 502 may also be referred to as a queueing latency, e.g. a UL latency.

The UL latency may be calculated and/or defined as: Average subframe or slot alignment + SR transmission time + SR processing time + grant transmission time + time for processing and/or encoding at the UE + data transmission time + time for processing and/or decoding at the gNB.

The queueing delay 502 may be equal to, or may comprise at least one of the terms of average subframe or slot alignment; SR transmission time; SR processing time; grant transmission time; time for processing and/or encoding at the UE; data transmission time; and time for processing and/or decoding at the gNB.

Assuming higher subcarrier spacing (SCS) will be adopted, UL latency will become much higher in terms of number of slots. Thus, the scheduling decision at a network node 200 needs to be made to a large extent in advance of the actual transmission 306 to be performed. Consequently, for a conventional network node, an accurate scheduling decision may be not always feasible since the UE may not be able to report buffer status on time.

The technique enable the UE 100 to report the queueing delay 502 in the step 302, e.g., in addition to an existing scheduling framework in 4G and 5G (e.g., up to 3GPP Release 17). The UE 100 may report its buffer status (i.e., buffer size and priority information) to the base station 200 upon arrival of new data 504. The base station 200 schedules grants 622 to the UE 100 considering at least one of the following pieces of information.

A first piece of information is a buffer size of Logical Channels (LCHs) or LCH Groups (LCGs). A second piece of information is a priority order (or briefly: priority) of LCHs or LCGs. A third piece of information is the queuing delay 502 of LCHs or LCGs.

The first two pieces of information (i.e., the first two types of information) may be collected based on reception of a scheduling request (SR) and/or a buffer status report (BSR).

A conventional base station has to estimate the queuing delay by itself based on reception of SR and/or BSR, and/or the transmission and/or reception activities of the UE 100. The estimation of the queuing delay is difficult for the network node as it does not know how long packets are queued in the UE buffer before they are transmitted, since there are no time stamps available in the received packets reflecting the time the packet has been in the buffer. The eventually achieved performance of the UE would be largely relying on how well the buffer status estimation (e.g., queuing delay) is performed by the base station.

In 5G evolution and 6G era, it would be even more challenging for a conventional gNB to perform a perfect buffer status estimation (especially in terms of queuing delay) for a UE, especially since a UE may be scheduled with multiple TTIs and/or slots at a time (so called multi-slot scheduling). This is because of greater SCSs (which may be adopted in future releases of 3GPP) so that scheduling and UE processing time in number of slots will be largely increased up to e.g., 30 to 50 slots.

Embodiments of the method 300 and the device 100 can enable the UE (e.g., the device 100) to report its queuing delay 502 to the network node 200. Embodiments of the method 400 and the device 200 can enable the network node (e.g., the device 200) to perform scheduling based on the queuing delay 502, e.g., of the LCH or LCGs.

The embodiments described herein can be utilized for any generation of wireless technologies (i.e., RAT) including operation in licensed and/or unlicensed spectrum; and/or time-division duplex (TDD) and/or frequency-division duplex (FDD) operation.

Alternatively or in addition, the queuing delay 502 may comprise, reflect or represent a queuing time of data 504, e.g., of a LCH or a LCG. The queuing delay 504 of a LCH or a LCG may be comprise and/or may be defined as at least one of the following:
- the queuing time of the oldest packet in the queue,
- the time until the queue becomes non-empty,
- the average time for a packet in the queue (i.e., between the time when the packet enters the queue and the time when the packet leaves the queue).

Herein, the queue may be a buffer or a processing queue at the UE 100.

In an embodiment of the first and second method aspects, the UE 100 transmit a control message 520 in the steps 302 and 402. The control message 520 may be indicative of the queuing delay 502 per LCH or LCG to the network node 200. The transmitting 302 and receiving 402 of the control message 520 comprises transmitting or receiving via at least one of the following options.

A first option comprises a control protocol data unit, PDU, of a protocol layer (e.g., SDAP, PDCP, or RLC) in a protocol stack for the radio access in the RAN. A second option comprises a radio resource control (RRC) information element (IE) or RRC signaling. A third option comprises a control PDU of a service data adaptation protocol (SDAP). A fourth option comprises a control PDU of a packet data convergence protocol (PDCP). A fifth option comprises a control PDU of a radio link control (RLC) layer. A sixth option comprises a medium access control (MAC) control element (CE). A seventh option comprises a signaling of a physical (PHY) layer or an uplink control information (UCI) or L1 signaling such as PUCCH, SRS, or RACH. A eighth option comprises an uplink message in a random access procedure or in a random access channel (RACH), optionally a random access preamble (RAP).

The above options may be examples of the control message 502. The above options may also be referred to as signaling alternatives.

In one embodiment of the first and second method aspects the SR and/or in the BSR as the control message 520 comprises a field (e.g., a flag) to indicate the queuing delay 502.

In one embodiment of the first and second method aspects, alternatively or in addition to a field or flag in the SR and/or in the BSR to indicate queuing delay, the control message 520 may be implemented by indicating the queueing delay 502 via resource mapping over which the SR and/or the BSR is transmitted.

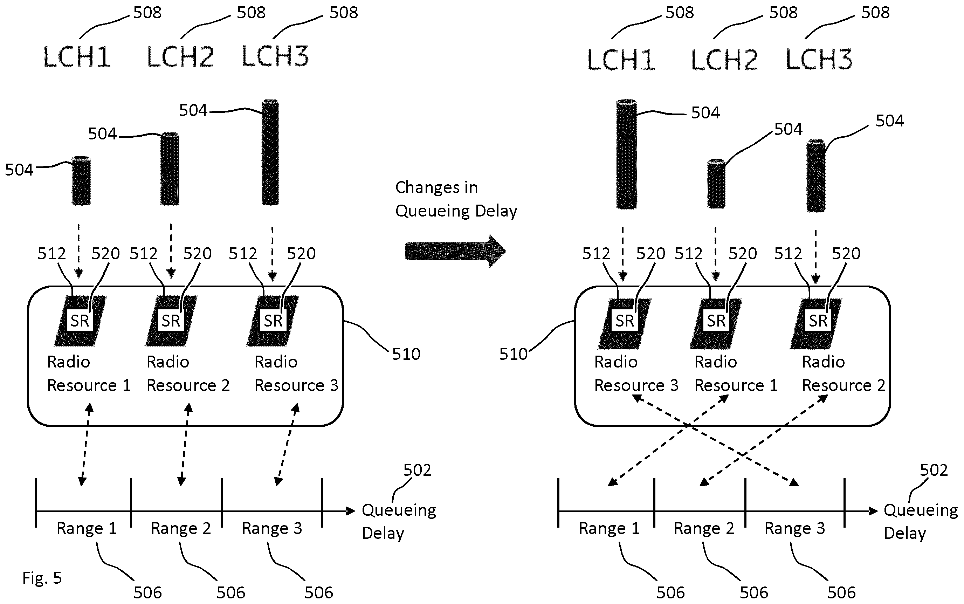

Figs. 5, 6 and 7 schematically illustrate embodiments of the resource mapping.

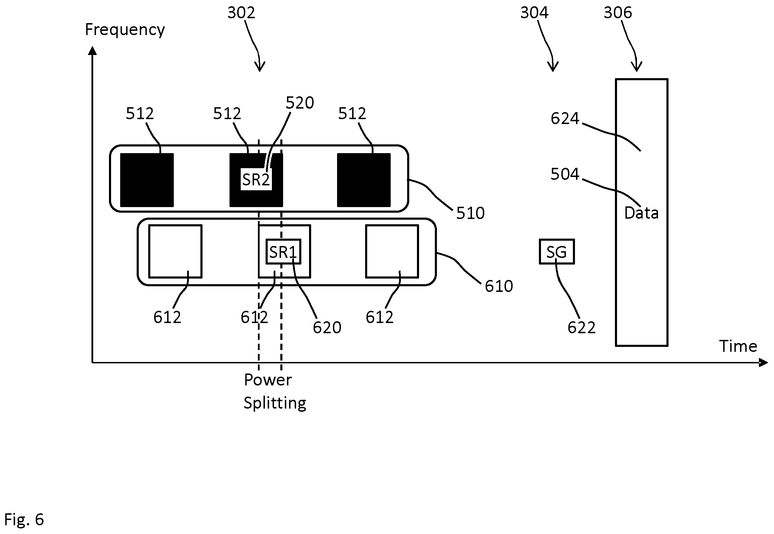

For example according to a 3GPP specification, e.g., as described in clause 5.4.4 of 3GPP document TS 38.321, version 16.3.0, each LCH maps to an SR configuration which comprises of a set of PUCCH SR resources across different bandwidth parts (BWPs) and cells, i.e., referred to as a first set 610 of resources 612, examples of which are illustrated in Fig. 6.

In addition, a (e.g., limited) set 510 of PUCCH SR resources are configured to each MAC entity at the UE 100 for indicating the queuing delay 502, i.e., referred to as a second set 510 of resources 512, examples of which are illustrated in Fig. 5.

Optionally, the second set 510 of SR resources 512 are shared by all LCHs 508 or LCGs as schematically shown in Fig. 5. The number of SR resources 512 in the set 510 may depend on how accurate the report (i.e., the indication) of the queueing delay 502 is.

Fig. 5 shows an example on how to select an SR resource 512 among the second set 510 of SR resources 512 according to queuing delay 502 of a LCH 508 for the transmission 302 (e.g., of the SR as the control message 520 implicitly indicating the queueing delay).

In a time instant T1 illustrated in left-hand side of Fig. 5, a SR resource 1 indicates or maps to a first range 506 of the queueing delay 502, e.g., a low queuing latency or a queueing delay 502 in the range 0 ms to 10 ms. A SR resource 2 indicates or maps to a second range 506 of the queueing delay 502, e.g., a medium queuing latency or a queueing delay 502 in the range of 10 ms to 20 ms. A SR resource 3 indicates or maps to a third range of the queueing delay 502 , e.g., a high queuing latency or a queueing delay greater than 20 ms.

This example shows a way to map and/or remap LCHs 508 to the second set 510 of SR resources 512, e.g. as illustrated in Fig. 5. At time instant T1, for the UE 100, LCH1 has low queuing delay, and therefore maps to SR resource 1. LCH2 has medium queuing delay and maps to SR resource 2. LCH3 maps to SR resource 3 due to high queuing delay.

At a time instant T2 (e.g., later than T1) illustrated in right-hand side of Fig. 5, LCH1 is re-mapped to the SR resource 3 due to high queuing delay. LCH2 and LCH3 also map to different SR resources corresponding to their associated queuing delay.

In an embodiment of the first and second method aspect, which may be implemented in addition to any other embodiment, e.g., for each LCH 508 or LCG, the UE 100 uses two or more SR resources 612 and 512 to indicate both availability of its data 504 and the queuing delay 502 of the data 504, e.g., respectively. The second SR resource 512 among the second set 510 of SR resources may be selected by the UE 100 according to the corresponding queuing delay 502 of the LCH 508 or LCG.

There are two options for the UE 100 to transmit the SR signaling as the control message 520 for an (e.g., for each) LCH 508 described.

In one option, which may be implemented with any embodiment of the first and second method aspects, the UE 100 transmits a first SR 620 using a resource 612 of the first set 610 of SR resources 612. Furthermore, the UE 100 transmits a second SR 520 using a resource 512 of the second set 510 of SR resources 512. Both SRs 520 and 620 are fully (e.g., if both SRs have the same time duration) or partially overlapping (e.g., if both SRs have different time duration) in time.

The UE 100 may split (e.g., shares) its transmission power between the two parallel SRs during the overlapping time, e.g., during the overlapping slots and/or OFDM symbols.

Fig. 6 shows schematic time diagram of an embodiment of the method 300 including transmitting a control message 520 and/or 620 according to the step 302 of the first method aspect. In the embodiment illustrated in Fig. 6, both SRs 520 and 620 are partially overlapping. An optional structure in the frequency domain is indicated on the vertical axis.

In a second option, which may be combined with any embodiment of first and second method aspects, the UE transmits a first SR 620 using a SR resource 612 of the first set 610 of SR resources 612 and a second SR 520 using a SR resource 512 of the second set 510 of SR resources 512 consecutively or inconsecutively in time.

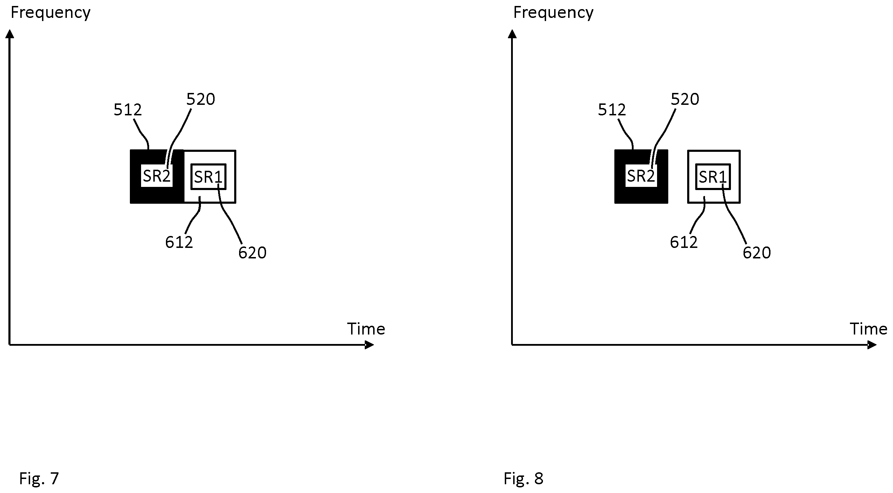

Fig. 7 shows a schematic time diagram for consecutively transmitting the second SR 520 in a SR resources 512 of the second set 510 and the first SR 620 in a SR resources 612 of the first set 610. An optional arrangement of the SR resources 512 and 612 in the frequency domain is indicated on the vertical axis.

Fig. 8 shows a schematic time diagram for inconsecutively transmitting the second SR 520 in a SR resources 512 of the second set 510 and the first SR 620 in a SR resources 612 of the first set 610. An optional arrangement of the SR resources 512 and 612 in the frequency domain is indicated on the vertical axis.

For any one of the above options, the UE 100 may transmit the second SR 520 using a SR resource 512 of the second set 510 of SR resources 512 earlier or prior to the first SR 620 using a SR resource 612 of the first set 610 of SR resources 612. In any case, for the LCH, the network node 200 may get the information on both priority of the queue and/or data 504 and its corresponding queuing delay 502 by receiving (e.g., combining) both SRs 520 and 620 in the step 402.

In one embodiment, which may be combined with any of other embodiments, according to the first and second method aspects, the UE 100 reports its queuing delay 502 of different LCHs or LCGs on PUSCH using a (e.g., small) configured grant (CG), e.g., prior to the scheduling grant received in the step 304. The CG is already assigned to the UE 100 so that the UE 100 can directly report its queuing delay 502 using the grant whenever triggered according to the step 302.

The CG is dedicatedly assigned to the UE 100 or shared among UEs. Alternatively or in addition, e.g. similar to the set 510 of resources described above, the UE 100 may use different CG resources to indicate different queuing delays 504. For example, the UE 100 may use CG resource 1 to indicate low queuing delay 502 for a LCH. The UE 100 may use CG resource 2 or 3 to indicate medium or high queuing delay 502 for the LCH, respectively.

In an embodiment, which may be combinable with the other embodiments, according to the first method aspect and correspondingly according to the second method aspect, the UE 100 may report its queuing delay 502 of different LCHs or LCGs using a dynamic grant, e.g., prior to the scheduling grant received in the step 304. The network node 200 can assign the dynamic grant to the UE 100 if the network node 200 wants the UE to report its queuing delay 502 on PUSCH using the dynamic grant in the step 302.

In an embodiment, which may be combinable with the other embodiments, according to the first method aspect and correspondingly according to the second method aspect, the reporting of the queuing delay 502 is (e.g., triggered) periodically.

In an embodiment, which may be combinable with the other embodiments, according to the first and second method aspects, the reporting 302 of the queuing delay 502 is triggered when at least one of the following events occurs:
A first event comprises that the data 504 (e.g., UL data) for a LCH which belongs to an LCG becomes available to a MAC entity of the radio device 100, and optionally
o the data 504 belongs to a LCH a priority of which is greater than any other LCH containing available data in the same LCG, for example this UL data belongs to a logical channel with higher priority than the priority of any logical channel containing available UL data which belong to any LCG; and/or
o the data 504 belongs to a LCH a priority of which is greater than a configured priority threshold, for example this UL data belongs to a logical channel with higher priority than a configured priority threshold; and/or
o no data is available for other LCHs in the same LCG, for example none of the logical channels which belong to an LCG contains any available UL data; and/or
o the data 504 is new data that has not been previously transmitted or the data 504 is not to be retransmitted in the transmission (306).

A second event comprises that there is a least one LCH or LCG containing available data 504 for transmission 306, which has not been scheduled with any scheduling grant 622 over a configured time period (e.g., X ms). This configured time period may be different for different LCHs or LCGs and may be a function of the priority of the LCH or LCGs.

A second event comprises that there is at least one LCH containing available data 504 for transmission 306 with higher priority than a configured priority threshold, which has not been scheduled with any grant 622 over a configured time period (e.g., Y ms).

A third event comprises that the queueing time of the oldest packet (e.g., a head of the queue) in a LCH or LCG is above a configured time period (e.g. Z ms). This configured time period may be different for different LCHs or LCGs and may be a function of the priority of the LCH.

A fourth event comprises that an arrival of new UL data 504 since last reporting has been over a configured threshold. This new data 504 may be the summarized new data belonging to any LCH or LCG. Alternatively or in addition, this UL data 504 may belong to a logical channel with higher priority than a configured priority threshold.

A fifth event comprises that a report of queuing data is requested by the network.

In one embodiment according to the first method aspect, a new radio resource control (RRC) information element (IE) may be defined to indicate queuing delay 502 per LCH or LCG for a UE.

In one embodiment according to the first method aspect, anew medium access control (MAC) control element (CE) may be defined to indicate queuing delay 502 per LCH or LCG for a UE.

In one embodiment according to the first method aspect, the SR indicates the queueing delay for the data for the given LCG/LCH priority.

In one embodiment according to the first method aspect, the BSR indicates the queueing delay for the buffered data for given LCG/LCH priority.

In one embodiment according to the first method aspect, a field is defined in the SR and/or BSR to indicate queuing delay. The field can be flexibly configured. This means that an RRC configuration (or RRC table) is provided to the UE which can be flexibly configured, and the UE can select the option (row in a table) which depicts the meaning of the field in the SR and/or BSR.

For example, a 2-bit field can be configured in a flexible manner which can be different for different UEs, e.g., let us take two UEs, UE#A and UE#B, where UE#A is provided with the RRC configuration as per Table 1, and UE#B is provided with the RRC configuration as per Table 2. Now, if UE#A sets 11 in the SR, it means it has moderate queueing delay for given LCG/LCH data for which the SR is mapped. Since the SR can also indicate availability of new data with a certain priority, Table 2 gives an example on how to combine both priority indicator and queuing delay 502 indicator together in the same table.

Alternatively, an SR signaling carries fields for indicating priority information and queuing delay 502 separately.

In addition, each SR and/ or BSR resource may be associated with different LCHs or LCGs. In this case, different tables may be different for different LCHs or LCGs.

**Table 1**

| UE#A's RRC table for the latency field for the associated LCH or LCG | |
|---|---|
| **Codeword (2-bit)** | **Interpretation** |
| 00 | Expected data, but data not arrived |
| 01 | Low queuing delay |
| 11 | Moderate queuing delay |
| 10 | Large queuing delay |

**Table 2**

| UE#B's RRC table for the latency field for the associated LCH or LCG | |
|---|---|
| **Codeword (2-bit)** | **Interpretation** |
| 00 | Low queueing delay, low priority data |
| 01 | High queueing delay, low priority data |
| 11 | Low queueing delay, high priority data |
| 10 | High queueing delay, high priority data |

In one embodiment according to the first method aspect, instead of adding a field in the SR and/or BSR to indicate queuing delay, it can be indicated via resource mapping over which the SR and /or BSR is transmitted. For example, if the SR is transmitted over a certain resource (e.g., PRB/slot/carrier/cell/mini slot/sub-slot/SCS resource) in frequency domain and/or time domain, then it can be mapped to a queueing delay measure.

In one embodiment according to the first and second method aspects, in the resource grid, the network node 200 can configure the UE 100 so that if it transmits the SR over a certain resource X, then the queuing delay 502 would be understood as low for the data, and if the UE transmits the SR over another resource Y, then the queuing delay 502 would be understood as high. The SR resources are dedicatedly assigned to the UE or shared among UEs.

In one embodiment according to the first method aspect, the UE 100 indicates its queuing delay 502 of different LCHs or LCGs to the network node via a RACH based signaling, i.e., in the context of a random access.

Fig. 9 shows an example of the radio device 100 performing a 4-step random access procedure for the transmitting 302 of the control message 520. The UE 100 may use different dedicated PRACH preambles (i.e., Msg1) as the control message 520 to indicate different queuing delay 502 information to the gNB 200. For each LCH or LCG, different PRACH preambles may be assigned separately. This option may be only feasible in case there is low RACH load in the cell.

Alternatively or in addition, the PRACH preamble may only indicate that the Random access is to report latency and that the detailed information (C-RNTI and queuing information) will come in Msg3 as the control message 520.

Furthermore, the UE 100 may use different RACH Occasions (ROs) to transmit a PRACH preamble 520 to indicate different queuing delay 502 information to the network node (e.g., by means of resource mapping). For each LCH or LCG, different ROs may be assigned separately. This option may be only feasible in case there is low RACH load in the cell of the RAN.

In another option, the indicators indicating queuing delay 502 (e.g., one or multiple LCHs or LCGs) are included in Msg3 as the control message 520 in case of 4-step RA.

Fig. 10 shows an example of a radio device 100 performing a 2-step random access procedure for the transmitting 302 of the control message 520. The UE 100 may use a message A (MsgA) as the control message 520 indicative of the queuing delay in the step 302.

In any embodiment, the indicators (i.e., for indicating the queueing delay 502) may be carried in MAC sub-headers. Alternatively, the indicators are carried using medium access control (MAC) control elements (CEs), e.g., new MAC CE or adding additional field for indicating queuing delay 502 in BSR. Alternatively, indicators are carried in a RRC message in MsgA (2-step RA) or Msg3 (4-step RA).

In one embodiment according to the first and second method aspects, a UE capability for indicating whether the UE supports queuing delay 502 report is defined.

In one embodiment according to first and second method aspects, the queuing delay 502 can be mapped to SR and/or BSR repetitions, e.g., if a UE 100 transmits SR and/or BSR with X repetitions (e.g., X=1), then queuing delay 502 would be understood as low, if it transmits with Y repetitions (e.g., Y=3), then queueing delay would be understood as large.

In one embodiment according to first method aspect, if a UE 100 has multiple traffic flows with the same LCG and/or LCH priority but different arrival rates, an additional flag can be introduced to distinguish between traffic flows based on arrivals. This flag can be a queuing flag where the flag indicates the periodicity of the traffic arrival. Frequent periodicity traffic can be indirectly inferred as high queuing traffic (if regular grants are not provided fast), and low/sparse periodicity traffic can be interpreted as low queueing traffic (because grants are not needed often).

For example, if a UE 100 has two traffic sources and both have the same MAC priority LCG and/or LCH X, but different arrival rates, then the UE 100 can indicate in the SR and/or the BSR that for the same traffic type, i.e., LCG and/or LCH X, the UE 100 has different flags, by way of example, two flags indicating, e.g., low (e.g., lower periodicity) and high (e.g., for higher periodicity). Then the network node 200 will understand that even though the UE 100 has the same traffic type but has different periodicities (or queueing rates) and accordingly provide different CGs (UL semi-persistent scheduling, UL SPS) mapping to different periodicities.

One can raise a question why not provide one CG instead of two CGs. The reason is that if two traffic flows have different periodicities, then sometimes it not possible to have one common periodicity, e.g., if one traffic has a periodicity of 7 slots and the other traffic has a periodicity of 11 slots, then there is no one CG possibly with a common periodicity.

The first method aspect and the second method aspect may further comprise or initiate an optional step 306 of transmitting and receiving 406 the data 504 using the radio resource 624 indicated in the scheduling grant 622.

The technique may be applied to uplink (UL), downlink (DL) or direct communications between radio devices, e.g., device-to-device (D2D) communications or sidelink (SL) communications of the data 504.

Fig. 11 shows a schematic block diagram for an embodiment of the device 100 according to the first device aspect. The device 100 comprises processing circuitry, e.g., one or more processors 1104 for performing the method 300 and memory 1106 coupled to the processors 1104. For example, the memory 1106 may be encoded with instructions that implement at least one of the modules 102, 104 and 106.

The one or more processors 1104 may be a combination of one or more of a microprocessor, controller, microcontroller, central processing unit, digital signal processor, application specific integrated circuit, field programmable gate array, or any other suitable computing device, resource, or combination of hardware, microcode and/or encoded logic operable to provide, either alone or in conjunction with other components of the device 100, such as the memory 1106, radio device functionality. For example, the one or more processors 1104 may execute instructions stored in the memory 1106. Such functionality may include providing various features and steps discussed herein, including any of the benefits disclosed herein. The expression "the device being operative to perform an action" may denote the device 100 being configured to perform the action.

As schematically illustrated in Fig. 11, the device 100 may be embodied by a radio device 1100, e.g., functioning as a UE. The radio device 1100 comprises a radio interface 1102 coupled to the device 100 for radio communication with one or more network nodes, e.g., functioning as a base station.

Fig. 12 shows a schematic block diagram for an embodiment of the device 200 according to the second device aspect. The device 200 comprises processing circuitry, e.g., one or more processors 1204 for performing the method 400 and memory 1206 coupled to the processors 1204. For example, the memory 1206 may be encoded with instructions that implement at least one of the modules 202, 204 and 206.

The one or more processors 1204 may be a combination of one or more of a microprocessor, controller, microcontroller, central processing unit, digital signal processor, application specific integrated circuit, field programmable gate array, or any other suitable computing device, resource, or combination of hardware, microcode and/or encoded logic operable to provide, either alone or in conjunction with other components of the device 200, such as the memory 1206, network node functionality. For example, the one or more processors 1204 may execute instructions stored in the memory 1206. Such functionality may include providing various features and steps discussed herein, including any of the benefits disclosed herein. The expression "the device being operative to perform an action" may denote the device 200 being configured to perform the action.

As schematically illustrated in Fig. 12, the device 200 may be embodied by a network node 1200, e.g., functioning as a base station. The network node 1200 comprises a radio interface 1202 coupled to the device 200 for radio communication with one or more radio devices, e.g., functioning as UEs.

With reference to Fig. 13, in accordance with an embodiment, a communication system 1300 includes a telecommunication network 1310, such as a 3GPP-type cellular network, which comprises an access network 1311, such as a radio access network, and a core network 1314. The access network 1311 comprises a plurality of base stations 1312a, 1312b, 1312c, such as NBs, eNBs, gNBs or other types of wireless access points, each defining a corresponding coverage area 1313a, 1313b, 1313c. Each base station 1312a, 1312b, 1312c is connectable to the core network 1314 over a wired or wireless connection 1315. A first user equipment (UE) 1391 located in coverage area 1313c is configured to wirelessly connect to, or be paged by, the corresponding base station 1312c. A second UE 1392 in coverage area 1313a is wirelessly connectable to the corresponding base station 1312a. While a plurality of UEs 1391, 1392 are illustrated in this example, the disclosed embodiments are equally applicable to a situation where a sole UE is in the coverage area or where a sole UE is connecting to the corresponding base station 1312.

Any of the base stations 1312 and the UEs 1391, 1392 may embody the radio device 1100 and the network node 1200, respectively.

The telecommunication network 1310 is itself connected to a host computer 1330, which may be embodied in the hardware and/or software of a standalone server, a cloud-implemented server, a distributed server or as processing resources in a server farm. The host computer 1330 may be under the ownership or control of a service provider, or may be operated by the service provider or on behalf of the service provider. The connections 1321, 1322 between the telecommunication network 1310 and the host computer 1330 may extend directly from the core network 1314 to the host computer 1330 or may go via an optional intermediate network 1320. The intermediate network 1320 may be one of, or a combination of more than one of, a public, private or hosted network; the intermediate network 1320, if any, may be a backbone network or the Internet; in particular, the intermediate network 1320 may comprise two or more sub-networks (not shown).

The communication system 1300 of Fig. 13 as a whole enables connectivity between one of the connected UEs 1391, 1392 and the host computer 1330. The connectivity may be described as an over-the-top (OTT) connection 1350. The host computer 1330 and the connected UEs 1391, 1392 are configured to communicate data and/or signaling via the OTT connection 1350, using the access network 1311, the core network 1314, any intermediate network 1320 and possible further infrastructure (not shown) as intermediaries. The OTT connection 1350 may be transparent in the sense that the participating communication devices through which the OTT connection 1350 passes are unaware of routing of uplink and downlink communications. For example, a base station 1312 need not be informed about the past routing of an incoming downlink communication with data originating from a host computer 1330 to be forwarded (e.g., handed over) to a connected UE 1391. Similarly, the base station 1312 need not be aware of the future routing of an outgoing uplink communication originating from the UE 1391 towards the host computer 1330.

By virtue of the method 300 being performed by any one of the UEs 1391 or 1392 and by virtue of the method 400 being performed by any one of the base stations 1312, the performance or range of the OTT connection 1350 can be improved, e.g., in terms of increased throughput and/or reduced latency. More specifically the host computer 1330 may communicate through the RAN to the radio device 100 with the reduced latency. Recued latency may improve the quality of communication due to possible packet loss.

Example implementations, in accordance with an embodiment of the UE, base station and host computer discussed in the preceding paragraphs, will now be described with reference to Fig. 14. In a communication system 1400, a host computer 1410 comprises hardware 1415 including a communication interface 1416 configured to set up and maintain a wired or wireless connection with an interface of a different communication device of the communication system 1400. The host computer 1410 further comprises processing circuitry 1418, which may have storage and/or processing capabilities. In particular, the processing circuitry 1418 may comprise one or more programmable processors, application-specific integrated circuits, field programmable gate arrays or combinations of these (not shown) adapted to execute instructions. The host computer 1410 further comprises software 1411, which is stored in or accessible by the host computer 1410 and executable by the processing circuitry 1418. The software 1411 includes a host application 1412. The host application 1412 may be operable to provide a service to a remote user, such as a UE 1430 connecting via an OTT connection 1450 terminating at the UE 1430 and the host computer 1410. In providing the service to the remote user, the host application 1412 may provide user data, which is transmitted using the OTT connection 1450. The user data may depend on the location of the UE 1430. The user data may comprise auxiliary information or precision advertisements (also: ads) delivered to the UE 1430. The location may be reported by the UE 1430 to the host computer, e.g., using the OTT connection 1450, and/or by the base station 1420, e.g., using a connection 1460.

The communication system 1400 further includes a base station 1420 provided in a telecommunication system and comprising hardware 1425 enabling it to communicate with the host computer 1410 and with the UE 1430. The hardware 1425 may include a communication interface 1426 for setting up and maintaining a wired or wireless connection with an interface of a different communication device of the communication system 1400, as well as a radio interface 1427 for setting up and maintaining at least a wireless connection 1470 with a UE 1430 located in a coverage area (not shown in Fig. 14) served by the base station 1420. The communication interface 1426 may be configured to facilitate a connection 1460 to the host computer 1410. The connection 1460 may be direct, or it may pass through a core network (not shown in Fig. 14) of the telecommunication system and/or through one or more intermediate networks outside the telecommunication system. In the embodiment shown, the hardware 1425 of the base station 1420 further includes processing circuitry 1428, which may comprise one or more programmable processors, application-specific integrated circuits, field programmable gate arrays or combinations of these (not shown) adapted to execute instructions. The base station 1420 further has software 1421 stored internally or accessible via an external connection.

The communication system 1400 further includes the UE 1430 already referred to. Its hardware 1435 may include a radio interface 1437 configured to set up and maintain a wireless connection 1470 with a base station serving a coverage area in which the UE 1430 is currently located. The hardware 1435 of the UE 1430 further includes processing circuitry 1438, which may comprise one or more programmable processors, application-specific integrated circuits, field programmable gate arrays or combinations of these (not shown) adapted to execute instructions. The UE 1430 further comprises software 1431, which is stored in or accessible by the UE 1430 and executable by the processing circuitry 1438. The software 1431 includes a client application 1432. The client application 1432 may be operable to provide a service to a human or non-human user via the UE 1430, with the support of the host computer 1410. In the host computer 1410, an executing host application 1412 may communicate with the executing client application 1432 via the OTT connection 1450 terminating at the UE 1430 and the host computer 1410. In providing the service to the user, the client application 1432 may receive request data from the host application 1412 and provide user data in response to the request data. The OTT connection 1450 may transfer both the request data and the user data. The client application 1432 may interact with the user to generate the user data that it provides.

It is noted that the host computer 1410, base station 1420 and UE 1430 illustrated in Fig. 14 may be identical to the host computer 1330, one of the base stations 1312a, 1312b, 1312c and one of the UEs 1391, 1392 of Fig. 13, respectively. This is to say, the inner workings of these entities may be as shown in Fig. 14, and, independently, the surrounding network topology may be that of Fig. 13.

In Fig. 14, the OTT connection 1450 has been drawn abstractly to illustrate the communication between the host computer 1410 and the UE 1430 via the base station 1420, without explicit reference to any intermediary devices and the precise routing of messages via these devices. Network infrastructure may determine the routing, which it may be configured to hide from the UE 1430 or from the service provider operating the host computer 1410, or both. While the OTT connection 1450 is active, the network infrastructure may further take decisions by which it dynamically changes the routing (e.g., on the basis of load balancing consideration or reconfiguration of the network).

The wireless connection 1470 between the UE 1430 and the base station 1420 is in accordance with the teachings of the embodiments described throughout this disclosure. One or more of the various embodiments improve the performance of OTT services provided to the UE 1430 using the OTT connection 1450, in which the wireless connection 1470 forms the last segment. More precisely, the teachings of these embodiments may reduce the latency and improve the data rate and thereby provide benefits such as better responsiveness and improved QoS.

A measurement procedure may be provided for the purpose of monitoring data rate, latency, QoS and other factors on which the one or more embodiments improve. There may further be an optional network functionality for reconfiguring the OTT connection 1450 between the host computer 1410 and UE 1430, in response to variations in the measurement results. The measurement procedure and/or the network functionality for reconfiguring the OTT connection 1450 may be implemented in the software 1411 of the host computer 1410 or in the software 1431 of the UE 1430, or both. In embodiments, sensors (not shown) may be deployed in or in association with communication devices through which the OTT connection 1450 passes; the sensors may participate in the measurement procedure by supplying values of the monitored quantities exemplified above, or supplying values of other physical quantities from which software 1411, 1431 may compute or estimate the monitored quantities. The reconfiguring of the OTT connection 1450 may include message format, retransmission settings, preferred routing etc.; the reconfiguring need not affect the base station 1420, and it may be unknown or imperceptible to the base station 1420. Such procedures and functionalities may be known and practiced in the art. In certain embodiments, measurements may involve proprietary UE signaling facilitating the host computer's 1410 measurements of throughput, propagation times, latency and the like. The measurements may be implemented in that the software 1411, 1431 causes messages to be transmitted, in particular empty or "dummy" messages, using the OTT connection 1450 while it monitors propagation times, errors etc.

Fig. 15 is a flowchart illustrating a method implemented in a communication system, in accordance with one embodiment. The communication system includes a host computer, a base station and a UE which may be those described with reference to Figs. 13 and 14. For simplicity of the present disclosure, only drawing references to Fig. 15 will be included in this paragraph. In a first step 1510 of the method, the host computer provides user data. In an optional substep 1511 of the first step 1510, the host computer provides the user data by executing a host application. In a second step 1520, the host computer initiates a transmission carrying the user data to the UE. In an optional third step 1530, the base station transmits to the UE the user data which was carried in the transmission that the host computer initiated, in accordance with the teachings of the embodiments described throughout this disclosure. In an optional fourth step 1540, the UE executes a client application associated with the host application executed by the host computer.

Fig. 16 is a flowchart illustrating a method implemented in a communication system, in accordance with one embodiment. The communication system includes a host computer, a base station and a UE which may be those described with reference to Figs. 13 and 14. For simplicity of the present disclosure, only drawing references to Fig. 16 will be included in this paragraph. In a first step 1610 of the method, the host computer provides user data. In an optional substep (not shown) the host computer provides the user data by executing a host application. In a second step 1620, the host computer initiates a transmission carrying the user data to the UE. The transmission may pass via the base station, in accordance with the teachings of the embodiments described throughout this disclosure. In an optional third step 1630, the UE receives the user data carried in the transmission.

As has become apparent from above description, at least some embodiments of the technique allow for an improved scheduling of radio resources for radio devices by a network node. Same or further embodiments can ensure that the quality of radio communication is improved by means of reducing latency with an improved method and means of scheduling.

Embodiments of the first method aspect provides means for the UE to report a queuing delay to a network node so that the network node has complete knowledge of one or more buffers (e.g., queues) at the UE. Based on this information, embodiments of the network node can improve scheduling (e.g., scheduling policies) considering at least one of buffer size and priority information in conjunction with the queuing delay (e.g., of different LCHs) according to the second method aspect. The reporting of the queuing delay can be useful especially in case of multi-TTI scheduling or multi-slots scheduling.

## Claims

1. A method (300), the method (300) being performed by a radio device (100; 1100; 1391; 1392; 1430), for reporting a queueing delay (502) of data (504) available for transmission (306) at a radio device (100; 1100; 1391; 1392; 1430) to a network node (200; 1200; 1312; 1420) of a radio access network, RAN (1311), providing radio access to the radio device (100; 1100; 1391; 1392; 1430), the method (300) comprising or initiating the steps of:
transmitting (302) a control message (520) from the radio device (100; 1100; 1391; 1392; 1430) to the network node (200; 1200; 1312; 1420), the control message (520) being indicative of the queueing delay (502) of the data (504) available for the transmission (306) at the radio device (100; 1100; 1391; 1392; 1430); wherein the transmitting (302) of the control message (520) comprises transmitting, from the radio device (100; 1100; 1391; 1392; 1430), a first SR (620) on a first SR radio resource (612) out of a first set (610) of SR radio resources (612) and a second SR (520) on a second SR radio resource (512) out of a second set (510) of SR radio resources (512); and
receiving (304) a scheduling grant (622) depending on the queueing delay (502) from the network node (200; 1200; 1312; 1420), the scheduling grant (622) being indicative of a radio resource (624) for the transmission (306) of the available data (504).

2. The method (300) of claim 1, wherein the queueing delay (502) relates to uplink, UL, data (504) available at the radio device (100; 1100; 1391; 1392; 1430) for the transmission (306) to the network node (200; 1200; 1312; 1420) or to sidelink, SL, data (504) available at the radio device (100; 1100; 1391; 1392; 1430) for the transmission (306) to another radio device (100; 1100; 1391; 1392; 1430).

3. The method (300) of claim 1 or 2, wherein the queueing delay (502) is indicated in terms of slots or transmission time intervals, TTls, of the RAN (1311), and/or
wherein the control message (520) is indicative of the queueing delay (502) of the available data (504) per logical channel, LCH (508), or per LCH group, LCG, and/or wherein the transmitting (302) of the control message (520) comprises transmitting at least one of:
a control protocol data unit, PDU, of a protocol layer in a protocol stack for the radio access in the RAN;
a radio resource control, RRC, information element, IE;
a control PDU of a service data adaptation protocol, SDAP;
a control PDU of a packet data convergence protocol, PDCP;
a control PDU of a radio link control, RLC, layer;
a medium access control, MAC, control element, CE;
a signaling of a physical, PHY, layer or an uplink control information, UCI; and
an uplink message in a random access procedure or in a random access channel, RACH, or a random access preamble, RAP, and/or
wherein the transmitting (302) of the control message (520) comprises transmitting at least one of:
a scheduling request, SR; and
a buffer status report, BSR, and/or
wherein the radio device (100; 1100; 1391; 1392; 1430) performs a 4-step random access procedure, and the transmitting (302) of the control message (520) comprises transmitting a third message, Msg3, of the random access procedure, which is indicative of the queueing delay (502) of the data (504) available for the transmission (306) at the radio device (100; 1100; 1391; 1392; 1430), or
wherein the radio device (100; 1100; 1391; 1392; 1430) performs a 2-step random access procedure, and the transmitting (302) of the control message (520) comprises transmitting a message A, MsgA, of the random access procedure, which is indicative of the queueing delay (502) of the data (504) available for the transmission (306) at the radio device (100; 1100; 1391; 1392; 1430), and/or
wherein the transmitting (302) of the control message (520) comprises transmitting a RAP from the radio device (100; 1100; 1391; 1392; 1430) in a RACH occasion, RO, out of a set of ROs, each of the ROs in the set corresponding to a different value or range of the queueing delay (502), and wherein a selection of the RO out of the set for the transmission (302) is indicative of the queueing delay (502), and/or
wherein the control message (520) comprises a flag or a field that is indicative of the queueing delay (502), and/or
wherein each of the SR radio resources (512) in the second set (510) corresponds to a different value or range of the queueing delay (502), and/or a selection of the second SR radio resource (512) out of the second set (510) is indicative of the queueing delay (502), and/or
wherein the transmitting (302) of the control message (520) comprises transmitting, from the radio device (100; 1100; 1391; 1392; 1430), a BSR on a BSR radio resource out of a set of BSR radio resources, and/or
wherein each of the BSR radio resources in the set corresponds to a different value or range of the queueing delay (502) and/or a selection of the BSR radio resource out of the set is indicative of the queueing delay (502).

4. The method (300) of any one of the claims 1 to 3, wherein the transmitting (302) of the control message (520) from the radio device (100; 1100; 1391; 1392; 1430) comprises transmitting at least one of the second SR (520) and the BSR earlier than or prior to transmitting the first SR (620), and/or wherein the first SR (620) is transmitted consecutively or inconsecutively to the second SR (520), and/or
wherein the transmission of the first SR (620) temporally overlaps with the transmission of the second SR (520),
and/or
wherein the radio device (100; 1100; 1391; 1392; 1430) splits a transmission power, which is used by the radio device (100; 1100; 1391; 1392; 1430) for exclusively transmitting at least one of the first SR (620) and the second SR (520) outside of the temporal overlap, for simultaneously transmitting the first SR (620) and the second SR (520) during the temporal overlap, and/or
wherein the control message (520) is transmitted (302) periodically, and/or
wherein the transmitting (302) of the control message (520) is triggered by the event of
the data (504) for a LCH which belongs to an LCG becomes available to a MAC entity of the radio device (100; 1100; 1391; 1392; 1430),
and/or in conjunction with at least one of:
the data (504) belongs to a LCH a priority of which is greater than any other LCH containing available data in the same LCG;
the data (504) belongs to a LCH a priority of which is greater than a configured priority threshold;
no data is available for other LCHs in the same LCG; and
the data (504) is new data that has not been previously transmitted or the data (504) is not to be retransmitted in the transmission (306).

5. The method (300) of any one of the claims 1 to 4, wherein the transmitting (302) of the control message (520) is triggered by at least one of the events of:
at least one LCH or LCG contains the data (504) available for the transmission (306), which has not been scheduled with any scheduling grant over a configured time period, and/or wherein the configured time period is different for different LCHs or LCGs, or the configured time period is the function of the priority of the LCH or the LCG;
the available data (504) belongs to a LCH a priority of which is greater than a configured priority threshold;
the available data comprises multiple data packets in a queue at the radio device (100; 1100; 1391; 1392; 1430) and the queueing delay (502) of at least one of data packets in the queue is greater than a configured time period; and
a time elapsed between a last transmission (302) of the control message (520) and availability of the data (504) is greater than a configured threshold.

6. The method (300) of any one of the claims 1 to 5, wherein the transmitting (302) of the control message (520) is triggered by receiving a request for the reporting of the queueing delay (502) from the network node (200; 1200; 1312; 1420).

7. The method (300) of any one of claim 1 to 6, further comprising or initiating:
receiving a dynamic scheduling grant for the control message (520), wherein the control message (520) is transmitted (302) on a radio resource indicated in the dynamic scheduling grant, and/or
wherein the radio resource indicated in the dynamic scheduling grant is on a physical uplink shared channel, PUSCH, of the RAN.

8. The method (300) of any one of claim 1 to 7, further comprising or initiating:
receiving a configured grant, CG, for the control message (520), wherein the control message (520) is transmitted (302) on a radio resource granted according to the CG, and/or
wherein the radio resource granted according to the CG is on a physical uplink shared channel, PUSCH, of the RAN.

9. The method of claim 8, wherein the radio resource granted according to the CG is shared among multiple radio devices (100; 1100; 1391; 1392; 1430) served by the RAN (1311).

10. A method (400), the method (400) being performed by a network node (200; 1200; 1312; 1420) of a radio access network, RAN (1311), providing radio access to the radio device (100; 1100; 1391; 1392; 1430), for scheduling a radio device (100; 1100; 1391; 1392; 1430) depending on a queueing delay (502) of data (504) available for transmission at the radio device (100; 1100; 1391; 1392; 1430), the method (400) comprising or initiating the steps of:
receiving (402) a control message (520) from the radio device (100; 1100; 1391; 1392; 1430) at the network node (200; 1200; 1312; 1420), the control message (520) being indicative of the queueing delay (502) of the data (504) available for transmission at the radio device (100; 1100; 1391; 1392; 1430), wherein the receiving (402) of the control message (520) comprises receiving, from the radio device (100; 1100; 1391; 1392; 1430), a first SR (620) on a first SR radio resource (612) out of a first set (610) of SR radio resources (612) and a second SR (520) on a second SR radio resource (512) out of a second set (510) of SR radio resources (512); and
transmitting (404) a scheduling grant (622) depending on the queueing delay (502) to the radio device (100; 1100; 1391; 1392; 1430), the scheduling grant (622) being indicative of a radio resource (624) for the transmission of the available data (504).

11. The method (400) of claim 10, further comprising the features or steps of any one of claims 2 to 22 or any feature or step corresponding thereto.

12. A computer program product comprising program code portions for performing the steps of any one of the claims 1 to 9 or of the claims 10 to 11 when the computer program product is executed on one or more computing devices (1104; 1204), wherein said computer program product is suitable to be stored on a computer-readable recording medium (1106; 1206).

13. A radio device (100; 1100; 1391; 1392; 1430) for reporting a queueing delay (502) of data (504) available for transmission (306) at the radio device (100; 1100; 1391; 1392; 1430) to a network node (200; 1200; 1312; 1420) of a radio access network, RAN (1311), providing radio access to the radio device (100; 1100; 1391; 1392; 1430), the radio device (100; 1100; 1391; 1392; 1430) comprising memory (1106; 1206) operable to store instructions and processing circuitry (1104; 1204) operable to execute the instructions, such that the radio device (100; 1100; 1391; 1392; 1430) is operable to:
transmit a control message (520) from the radio device (100; 1100; 1391; 1392; 1430) to the network node (200; 1200; 1312; 1420), the control message (520) being indicative of the queueing delay (502) of the data (504) available for the transmission (306) at the radio device (100; 1100; 1391; 1392; 1430), wherein the transmitting (302) of the control message (520) comprises transmitting, from the radio device (100; 1100; 1391; 1392; 1430), a first SR (620) on a first SR radio resource (612) out of a first set (610) of SR radio resources (612) and a second SR (520) on a second SR radio resource (512) out of a second set (510) of SR radio resources (512); and
receive a scheduling grant (622) depending on the queueing delay (502) from the network node (200; 1200; 1312; 1420), the scheduling grant (622) being indicative of a radio resource (624) for the transmission (306) of the available data (504).

14. The radio device (100; 1100; 1391; 1392; 1430) of claim 13, further operable to perform the steps of any one of claims 2 to 9.

15. A network node (200; 1200; 1312; 1420) for scheduling a radio device (100; 1100; 1391; 1392; 1430) depending on a queueing delay (502) of data (504) available for transmission at the radio device (100; 1100; 1391; 1392; 1430), the network node (200; 1200; 1312; 1420) comprising memory (1206) operable to store instructions and processing circuitry operable to execute the instructions, such that the network node (200; 1200; 1312; 1420) is operable to:
receive a control message (520) from the radio device (100; 1100; 1391; 1392; 1430) at the network node (200; 1200; 1312; 1420), the control message (520) being indicative of the queueing delay (502) of the data (504) available for transmission at the radio device (100; 1100; 1391; 1392; 1430), wherein the receiving (402) of the control message (520) comprises receiving, from the radio device (100; 1100; 1391; 1392; 1430), a first SR (620) on a first SR radio resource (612) out of a first set (610) of SR radio resources (612) and a second SR (520) on a second SR radio resource (512) out of a second set (510) of SR radio resources (512); and
transmit a scheduling grant (622) depending on the queueing delay (502) to the radio device (100; 1100; 1391; 1392; 1430), the scheduling grant (622) being indicative of a radio resource (624) for the transmission of the available data (504).

16. The network node (200; 1200; 1312; 1420) of claim 15, further operable to perform any one of the steps of any one of claims 10 and 11.

## Patentansprüche

1. Verfahren (300), wobei das Verfahren (300) von einer Funkvorrichtung (100; 1100; 1391; 1392; 1430) durchgeführt wird, zur Meldung einer Warteschlangenverzögerung (502) von Daten (504), die an einer Funkvorrichtung (100; 1100; 1391; 1392; 1430) zur Übertragung (306) an einen Netzwerkknoten (200; 1200; 1312; 1420) eines Funkzugangsnetzwerks, RAN, (1311), verfügbar sind, der Funkzugang für die Funkvorrichtung (100; 1100; 1391; 1392; 1430) bereitstellt, wobei das Verfahren (300) die folgenden Schritte umfasst oder initiiert:
Senden (302) einer Steuernachricht (520) von der Funkvorrichtung (100; 1100; 1391; 1392; 1430) an den Netzwerkknoten (200; 1200; 1312; 1420), wobei die Steuernachricht (520) die Warteschlangenverzögerung (502) der Daten (504) angibt, die an der Funkvorrichtung (100; 1100; 1391; 1392; 1430) zur Übertragung (306) verfügbar sind; wobei das Senden (302) der Steuernachricht (520) Senden von der Funkvorrichtung (100; 1100; 1391; 1392; 1430) einer ersten SR (620) auf einer ersten SR-Funkressource (612) aus einem ersten Satz (610) von SR-Ressourcen (612) und einer zweiten SR (520) auf einer zweiten SR-Funkressource (512) aus einem zweiten Satz (510) von SR-Funkressourcen (512) umfasst; und
Empfangen (304) einer Dispositionsfreigabe (622) von dem Netzwerkknoten (200; 1200; 1312; 1420) in Abhängigkeit von der Warteschlangenverzögerung (502), wobei die Dispositionsfreigabe (622) eine Funkressource (624) für die Übertragung (306) der verfügbaren Daten (504) angibt.

2. Verfahren (300) nach Anspruch 1, wobei die Warteschlangenverzögerung (502) mit Uplink-Daten, UL-Daten, (504), die an der Funkvorrichtung (100; 1100; 1391; 1392; 1430) zur Übertragung (306) an den Netzwerkknoten (200; 1200; 1312; 1420) verfügbar sind, oder mit Sidelink-Daten, SL-Daten, (504), die an der Funkvorrichtung (100; 1100; 1391; 1392; 1430) zur Übertragung (306) an eine andere Funkvorrichtung (100; 1100; 1391; 1392; 1430) verfügbar sind, in Beziehung steht.

3. Verfahren (300) nach Anspruch 1 oder 2, wobei die Warteschlangenverzögerung (502) in Form von Zeitschlitzen oder Sendezeitintervallen, TTls, des RAN (1311) angegeben wird, und/oder
wobei die Steuernachricht (520) die Warteschlangenverzögerung (502) der verfügbaren Daten (504) pro logischem Kanal, LCH, (508) oder pro LCH-Gruppe, LCG, angibt, und/oder
wobei das Senden (302) der Steuernachricht (520) Senden von mindestens einem von Folgenden umfasst:
einer Steuerungs-Protokolldateneinheit, Steuerungs-PDU, einer Protokollschicht in einem Protokollstapel für den Funkzugang im RAN;
einem Funkressourcensteuerungs-Informationselement, RRC-IE;
einer Steuerungs-PDU eines Dienstdatenanpassungsprotokolls, SDAP;
einer Steuerungs-PDU eines Paketdatenkonvergenzprotokolls, PDCP;
einer Steuerungs-PDU einer Funkverbindungssteuerungsschicht, RLC-Schicht;
einem Medienzugriffssteuerungs-,MAC-, Steuerelement, CE; oder
einer Signalisierung einer physikalischen, PHY, Schicht oder einer Uplink-Steuerinformation, UCI; und
einer Uplink-Nachricht in einer Direktzugriffsprozedur oder in einem Direktzugriffskanal, RACH, oder einer Direktzugriffspräambel, RAP, und/oder
wobei das Senden (302) der Steuernachricht (520) Senden von mindestens einem von Folgenden umfasst:
einer Dispositionsanforderung, SR; und
einem Pufferstatusbericht, BSR, und/oder
wobei die Funkvorrichtung (100; 1100; 1391; 1392; 1430) eine Direktzugriffsprozedur in 4 Schritten durchführt und das Senden (302) der Steuernachricht (520) Senden einer dritten Nachricht, Msg3, der Direktzugriffsprozedur umfasst, die die Warteschlangenverzögerung (502) der Daten (504) angibt, die an der Funkvorrichtung (100; 1100; 1391; 1392; 1430) zur Übertragung (306) verfügbar sind, oder
wobei die Funkvorrichtung (100; 1100; 1391; 1392; 1430) eine Direktzugriffsprozedur in 2 Schritten durchführt und das Senden (302) der Steuernachricht (520) Senden einer Nachricht A, MsgA, der Direktzugriffsprozedur umfasst, die die Warteschlangenverzögerung (502) der Daten (504) angibt, die an der Funkvorrichtung (100; 1100; 1391; 1392; 1430) zur Übertragung (306) verfügbar sind, und/oder
wobei das Senden (302) der Steuernachricht (520) Senden einer RAP von der Funkvorrichtung (100; 1100; 1391; 1392; 1430) bei einer RACH-Gelegenheit, RO, aus einem Satz von ROs umfasst, wobei jede der ROs in dem Satz einem anderen Wert oder Bereich der Warteschlangenverzögerung (502) entspricht, und wobei eine Auswahl der RO aus dem Satz für die Übertragung (302) die Warteschlangenverzögerung (502) angibt, und/oder
wobei die Steuernachricht (520) ein Flag oder ein Feld umfasst, das die Warteschlangenverzögerung (502) angibt, und/oder
wobei jede der SR-Funkressourcen (512) in dem zweiten Satz (510) einem anderen Wert oder Bereich der Warteschlangenverzögerung (502) entspricht und/oder eine Auswahl der zweiten SR-Funkressource (512) aus dem zweiten Satz (510) die Warteschlangenverzögerung (502) angibt, und/oder
wobei das Senden (302) der Steuernachricht (520) Senden eines BSR von der Funkvorrichtung (100; 1100; 1391; 1392; 1430) auf einer BSR-Funkressource aus einem Satz von BSR-Funkressourcen umfasst, und/oder
wobei jede der BSR-Funkressourcen in dem Satz einem anderen Wert oder Bereich der Warteschlangenverzögerung (502) entspricht und/oder eine Auswahl der BSR-Funkressource aus dem Satz die Warteschlangenverzögerung (502) angibt.

4. Verfahren (300) nach einem der Ansprüche 1 bis 3, wobei das Senden (302) der Steuernachricht (520) von der Funkvorrichtung (100; 1100; 1391; 1392; 1430) Senden mindestens eines von der zweiten SR (520) und dem BSR früher als die erste SR (620) oder vor dem Senden derselben umfasst, und/oder
wobei die erste SR (620) auf die zweite SR (520) nachfolgend oder nicht nachfolgend gesendet wird, und/oder
wobei sich die Übertragung der ersten SR (620) zeitlich mit der Übertragung der zweiten SR (520) überlappt,
und/oder wobei die Funkvorrichtung (100; 1100; 1391; 1392; 1430) eine Sendeleistung, die von der Funkvorrichtung (100; 1100; 1391; 1392; 1430) zum ausschließlichen Senden mindestens einer von der ersten SR (620) und der zweiten SR (520) außerhalb der zeitlichen Überlappung verwendet wird, aufteilt, um die erste SR (620) und die zweite SR (520) während der zeitlichen Überlappung gleichzeitig zu senden, und/oder
wobei die Steuernachricht (520) periodisch gesendet wird (302), und/oder
wobei das Senden (302) der Steuernachricht (520) ausgelöst wird durch das Ereignis, dass
die Daten (504) für einen LCH, der zu einer LCG gehört, für eine MAC-Entität der Funkvorrichtung (100; 1100; 1391; 1392; 1430) verfügbar werden, und/oder
in Verbindung mit mindestens einem von Folgendem:
die Daten (504) gehören zu einem LCH, dessen Priorität höher ist als die jedes anderen LCH in der LCG, der verfügbare Daten enthält;
die Daten (504) gehören zu einem LCH, dessen Priorität höher ist als ein konfigurierter Prioritätsschwellenwert;
es sind keine Daten für andere LCHs in derselben LCG verfügbar; und
die Daten (504) sind neue Daten, die zuvor noch nicht gesendet wurden, oder die Daten (504) sollen in der Übertragung (306) nicht erneut gesendet werden.

5. Verfahren (300) nach einem der Ansprüche 1 bis 4, wobei das Senden (302) der Steuernachricht (520) durch mindestens eines der folgenden Ereignisse ausgelöst wird:
mindestens ein LCH oder mindestens eine LCG enthält die Daten (504), die zur Übertragung (306) verfügbar sind, die über einen konfigurierten Zeitraum nicht mit einer Dispositionsfreigabe disponiert wurde, und/oder wobei der konfigurierte Zeitraum für verschiedene LCHs oder LCGs verschieden ist oder der konfigurierte Zeitraum die Funktion der Priorität des LCH oder der LCG ist;
die verfügbaren Daten (504) gehören zu einem LCH, dessen Priorität höher ist als ein konfigurierter Prioritätsschwellenwert;
die verfügbaren Daten umfassen mehrere Datenpakete in einer Warteschlange an der Funkvorrichtung (100; 1100; 1391; 1392; 1430) und die Warteschlangenverzögerung (502) mindestens eines der Datenpakete in der Warteschlange ist länger als ein konfigurierter Zeitraum; und
eine Zeit, die zwischen der letzten Übertragung (302) der Steuernachricht (520) und der Verfügbarkeit der Daten (504) verstrichen ist, ist länger als ein konfigurierter Schwellenwert.

6. Verfahren (300) nach einem der Ansprüche 1 bis 5, wobei das Senden (302) der Steuernachricht (520) durch den Empfang einer Anforderung zur Meldung der Warteschlangenverzögerung (502) von dem Netzwerkknoten (200; 1200; 1312; 1420) ausgelöst wird.

7. Verfahren (300) nach einem der Ansprüche 1 bis 6, ferner umfassend oder initiierend:
Empfangen einer dynamischen Dispositionsfreigabe für die Steuernachricht (520), wobei die Steuernachricht (520) auf einer Funkressource gesendet wird (302), die in der dynamischen Dispositionsfreigabe angegeben ist, und/oder wobei die in der dynamischen Dispositionsfreigabe angegebene Funkressource auf einem gemeinsamen physikalischen Uplink-Kanal, PUSCH, des RAN ist.

8. Verfahren (300) nach einem der Ansprüche 1 bis 7, ferner umfassend oder initiierend:
Empfangen einer konfigurierten Freigabe, CG, für die Steuernachricht (520), wobei die Steuernachricht (520) auf einer gemäß der CG freigegebenen Funkressource gesendet wird (302), und/oder
wobei die gemäß der CG freigegebene Funkressource auf einem gemeinsamen physikalischen Uplink-Kanal, PUSCH, des RAN ist.

9. Verfahren nach Anspruch 8, wobei die gemäß der CG freigegebene Funkressource von mehreren Funkvorrichtungen (100; 1100; 1391; 1392; 1430), die von dem RAN (1311) bedient werden, gemeinsam genutzt wird.

10. Verfahren (400), wobei das Verfahren (400) von einem Netzwerkknoten (200; 1200; 1312; 1420) eines Funkzugangsnetzwerks, RAN, (1311) durchgeführt wird, der Funkzugang für die Funkvorrichtung (100; 1100; 1391; 1392; 1430) bereitstellt, zur Disposition einer Funkvorrichtung (100; 1100; 1391; 1392; 1430) in Abhängigkeit von einer Warteschlangenverzögerung (502) von Daten (504), die zur Übertragung an der Funkvorrichtung (100; 1100; 1391; 1392; 1430) verfügbar sind, wobei das Verfahren (400) die folgenden Schritte umfasst oder initiiert:
Empfangen (402) einer Steuernachricht (520) von der Funkvorrichtung (100; 1100; 1391; 1392; 1430) an dem Netzwerkknoten (200; 1200; 1312; 1420), wobei die Steuernachricht (520) die Warteschlangenverzögerung (502) der Daten (504) angibt, die an der Funkvorrichtung (100; 1100; 1391; 1392; 1430) zur Übertragung verfügbar sind; wobei das Empfangen (402) der Steuernachricht (520) Empfangen von der Funkvorrichtung (100; 1100; 1391; 1392; 1430) einer ersten SR (620) auf einer ersten SR-Funkressource (612) aus einem ersten Satz (610) von SR-Ressourcen (612) und einer zweiten SR (520) auf einer zweiten SR-Funkressource (512) aus einem zweiten Satz (510) von SR-Funkressourcen (512) umfasst; und
Senden (404) einer Dispositionsfreigabe (622) in Abhängigkeit von der Warteschlangenverzögerung (502) an die Funkvorrichtung (100; 1100; 1391; 1392; 1430), wobei die Dispositionsfreigabe (622) eine Funkressource (624) für die Übertragung der verfügbaren Daten (504) angibt.

11. Verfahren (400) nach Anspruch 10, ferner umfassend die Merkmale und Schritte nach einem der Ansprüche 2 bis 22 oder die Merkmale und Schritte, die diesen entsprechen.

12. Computerprogrammprodukt, umfassend Programmcodeabschnitte zum Ausführen der Schritte nach einem der Ansprüche 1 bis 9 oder 10 bis 11, wenn das Computerprogrammprodukt auf einer oder mehreren Computervorrichtungen (1104; 1204) ausgeführt wird, wobei das Computerprogrammprodukt dazu geeignet ist, auf einem computerlesbaren Aufzeichnungsmedium (1106; 1206) gespeichert zu werden.

13. Funkvorrichtung (100; 1100; 1391; 1392; 1430) zum Melden einer Warteschlangenverzögerung (502) von Daten (504), die an der Funkvorrichtung (100; 1100; 1391; 1392; 1430) zur Übertragung (306) an einen Netzwerkknoten (200; 1200; 1312; 1420) eines Funkzugangsnetzwerks, RAN, (1311) verfügbar sind, der Funkzugang für die Funkvorrichtung (100; 1100; 1391; 1392; 1430) bereitstellt, wobei die Funkvorrichtung (100; 1100; 1391; 1392; 1430) Speicher (1106; 1206), der dazu ausgelegt ist, Anweisungen zu speichern, und Verarbeitungsschaltungsanordnung (1104; 1204) umfasst, die dazu ausgelegt ist, die Anweisungen auszuführen, so dass die Funkvorrichtung (100; 1100; 1391; 1392; 1430) zu Folgendem ausgelegt ist:
Senden einer Steuernachricht (520) von der Funkvorrichtung (100; 1100; 1391; 1392; 1430) an den Netzwerkknoten (200; 1200; 1312; 1420), wobei die Steuernachricht (520) die Warteschlangenverzögerung (502) der Daten (504) angibt, die an der Funkvorrichtung (100; 1100; 1391; 1392; 1430) zur Übertragung (306) verfügbar sind; wobei das Senden (302) der Steuernachricht (520) Senden von der Funkvorrichtung (100; 1100; 1391; 1392; 1430) einer ersten SR (620) auf einer ersten SR-Funkressource (612) aus einem ersten Satz (610) von SR-Ressourcen (612) und einer zweiten SR (520) auf einer zweiten SR-Funkressource (512) aus einem zweiten Satz (510) von SR-Funkressourcen (512) umfasst; und
Empfangen einer Dispositionsfreigabe (622) von dem Netzwerkknoten (200; 1200; 1312; 1420) in Abhängigkeit von der Warteschlangenverzögerung (502), wobei die Dispositionsfreigabe (622) eine Funkressource (624) für die Übertragung (306) der verfügbaren Daten (504) angibt.

14. Funkvorrichtung (100; 1100; 1391; 1392; 1430) nach Anspruch 13, die ferner dazu ausgelegt ist, die Schritte nach einem der Ansprüche 2 bis 9 auszuführen.

15. Netzwerkknoten (200; 1200; 1312; 1420) zum Disponieren einer Funkvorrichtung (100; 1100; 1391; 1392; 1430) in Abhängigkeit von einer Warteschlangenverzögerung (502) von Daten (504), die an der Funkvorrichtung (100; 1100; 1391; 1392; 1430) zur Übertragung verfügbar sind, wobei der Netzwerkknoten (200; 1200; 1312; 1420) Speicher (1206), der dazu ausgelegt ist, Anweisungen zu speichern, und Verarbeitungsschaltungsanordnung umfasst, die dazu ausgelegt ist, die Anweisungen auszuführen, so dass der Netzwerkknoten (200; 1200; 1312; 1420) zu Folgendem ausgelegt ist:
Empfangen einer Steuernachricht (520) von der Funkvorrichtung (100; 1100; 1391; 1392; 1430) an dem Netzwerkknoten (200; 1200; 1312; 1420), wobei die Steuernachricht (520) die Warteschlangenverzögerung (502) der Daten (504) angibt, die an der Funkvorrichtung (100; 1100; 1391; 1392; 1430) zur Übertragung verfügbar sind; wobei das Empfangen (402) der Steuernachricht (520) Empfangen von der Funkvorrichtung (100; 1100; 1391; 1392; 1430) einer ersten SR (620) auf einer ersten SR-Funkressource (612) aus einem ersten Satz (610) von SR-Ressourcen (612) und einer zweiten SR (520) auf einer zweiten SR-Funkressource (512) aus einem zweiten Satz (510) von SR-Funkressourcen (512) umfasst; und
Senden einer Dispositionsfreigabe (622) in Abhängigkeit von der Warteschlangenverzögerung (502) an die Funkvorrichtung (100; 1100; 1391; 1392; 1430), wobei die Dispositionsfreigabe (622) eine Funkressource (624) für die Übertragung der verfügbaren Daten (504) angibt.

16. Netzwerkknoten (200; 1200; 1312; 1420) nach Anspruch 15, der ferner dazu ausgelegt ist, einen der Schritte nach einem der Ansprüche 10 bis 11 auszuführen.

## Revendications

1. Procédé (300), le procédé (300) étant réalisé par un dispositif radio (100 ; 1100 ; 1391 ; 1392 ; 1430), pour rapporter un retard de mise en file d'attente (502) de données (504) disponibles pour une transmission (306) au niveau d'un dispositif radio (100 ; 1100 ; 1391 ; 1392 ; 1430) vers un nœud de réseau (200 ; 1200 ; 1312 ; 1420) d'un réseau d'accès radio, RAN (1311), fournissant un accès radio au dispositif radio (100 ; 1100 ; 1391 ; 1392 ; 1430), le procédé (300) comprenant ou initiant les étapes suivantes :
la transmission (302) d'un message de commande (520) depuis le dispositif radio (100 ; 1100 ; 1391 ; 1392 ; 1430) au nœud de réseau (200 ; 1200 ; 1312 ; 1420), le message de commande (520) indiquant le retard de mise en file d'attente (502) des données (504) disponibles pour la transmission (306) au niveau du dispositif radio (100 ; 1100 ; 1391 ; 1392 ; 1430) ; dans lequel la transmission (302) du message de commande (520) comprend la transmission, depuis le dispositif radio (100 ; 1100 ; 1391 ; 1392 ; 1430), d'une première SR (620) sur une première ressource radio de SR (612) parmi un premier ensemble (610) de ressources radio de SR (612) et d'une deuxième SR (520) sur une deuxième ressource radio de SR (512) parmi un deuxième ensemble (510) de ressources radio de SR (512) ; et
la réception (304) d'une autorisation de planification (622) en fonction du retard de mise en file d'attente (502) depuis le nœud de réseau (200 ; 1200 ; 1312 ; 1420), l'autorisation de planification (622) indiquant une ressource radio (624) pour la transmission (306) des données (504) disponibles.

2. Procédé (300) selon la revendication 1, dans lequel le retard de mise en file d'attente (502) concerne des données de liaison montante, UL, (504) disponibles au niveau du dispositif radio (100 ; 1100 ; 1391 ; 1392 ; 1430) pour la transmission (306) au nœud de réseau (200 ; 1200 ; 1312 ; 1420) ou des données de liaison latérale, SL, (504) disponibles au niveau du dispositif radio (100 ; 1100 ; 1391; 1392 ; 1430) pour la transmission (306) à un autre dispositif radio (100 ; 1100 ; 1391 ; 1392 ; 1430).

3. Procédé (300) selon la revendication 1 ou 2, dans lequel le retard de mise en file d'attente (502) est indiqué en termes de créneaux ou d'intervalles de temps de transmission, TTI, du RAN (1311), et/ou dans lequel le message de commande (520) indique le retard de mise en file d'attente (502) des données (504) disponibles par canal analogique, LCH (508), ou par groupe de LCH, LCG, et/ou dans lequel la transmission (302) du message de commande (520) comprend la transmission d'au moins un parmi :
une unité de données de protocole, PDU, de commande d'une couche de protocole dans une pile de protocoles pour l'accès radio dans le RAN ;
un élément d'information, IE, de commande de ressources radio, RRC ;
une PDU de commande d'un protocole d'adaptation de données de service, SDAP ;
une PDU de commande d'un protocole de convergence de données en paquets, PDCP ;
une PDU de commande d'une couche de commande de liaison radio, RLC ;
un élément de commande, CE, de commande d'accès au support, MAC ;
une signalisation d'une couche physique, PHY, ou d'une information de commande de liaison montante, UCI ; et
un message de liaison montante dans une procédure d'accès aléatoire ou dans un canal d'accès aléatoire, RACH, ou dans un préambule d'accès aléatoire, RAP, et/ou dans lequel la transmission (302) du message de commande (520) comprend la transmission d'au moins un parmi :
une demande de planification, SR ; et
un rapport d'état de mémoire tampon, BSR, et/ou dans lequel le dispositif radio (100 ; 1100 ; 1391 ; 1392 ; 1430) réalise une procédure d'accès aléatoire à 4 étapes, et la transmission (302) du message de commande (520) comprend la transmission d'un troisième message, Msg3, de la procédure d'accès aléatoire qui indique le retard de mise en mémoire tampon (502) des données (504) disponibles pour la transmission (306) au niveau du dispositif radio (100 ; 1100 ; 1391 ; 1392 ; 1430), ou
dans lequel le dispositif radio (100 ; 1100 ; 1391 ; 1392 ; 1430) réalise une procédure d'accès aléatoire à 2 étapes, et la transmission (302) du message de commande (520) comprend la transmission d'un message A, MsgA, de la procédure d'accès aléatoire, qui indique le retard de mise en file d'attente (502) des données (504) disponibles pour la transmission (306) au niveau du dispositif radio (100 ; 1100 ; 1391 ; 1392 ; 1430), et/ou
dans lequel la transmission (302) du message de commande (520) comprend la transmission d'un RAP depuis le dispositif radio (100 ; 1100 ; 1391 ; 1392 ; 1430) dans une occasion de RACH, RO, parmi un ensemble de RO, chacune des RO dans l'ensemble correspondant à une valeur différente ou à une plage différente du retard de mise en file d'attente (502), et dans lequel une sélection de la RO parmi l'ensemble pour la transmission (302) indique le retard de mise en file d'attente (502), et/ou
dans lequel le message de commande (520) comprend un drapeau ou un champ indiquant le retard de mise en file d'attente (502), et/ou
dans lequel chacune des ressources radio SR (512) dans le deuxième ensemble (510) correspond à une valeur différente ou à une plage différente du retard de mise en file d'attente (502), et/ou une sélection de la deuxième ressource radio SR (512) parmi le deuxième ensemble (510) indique le retard de mise en file d'attente (502), et/ou
dans lequel la transmission (302) du message de commande (520) comprend la transmission, depuis le dispositif radio (100 ; 1100 ; 1391 ; 1392 ; 1430), d'un BSR sur une ressource radio BSR parmi un ensemble de ressources radio BSR, et/ou
dans lequel chacune des ressources radio BSR dans l'ensemble correspond à une valeur différente ou une plage différente du retard de mise en file d'attente (502) et/ou une sélection de la ressource radio BSR parmi l'ensemble indique le retard de mise en file d'attente (502).

4. Procédé (300) selon l'une quelconque des revendications 1 à 3, dans lequel la transmission (302) du message de commande (520) depuis le dispositif radio (100 ; 1100 ; 1391 ; 1392 ; 1430) comprend la transmission d'au moins un parmi la deuxième SR (520) et le BSR antérieurement à et/ou avant la transmission de la première SR (620), et/ou
dans lequel la première SR (620) est transmise consécutivement ou non consécutivement à la deuxième SR (520), et/ou
dans lequel la transmission de la première SR (620) chevauche temporellement la transmission de la deuxième SR (520), et/ou
dans lequel le dispositif radio (100 ; 1100 ; 1391 ; 1392 ; 1430) divise une puissance de transmission, qui est utilisée par le dispositif radio (100 ; 1100 ; 1391 ; 1392 ; 1430) pour transmettre exclusivement au moins l'une parmi la première SR (620) et la deuxième SR (520) à l'extérieur du chevauchement temporel, pour transmettre simultanément la première SR (620) et la deuxième SR (520) pendant le chevauchement temporel, et/ou
dans lequel le message de commande (520) est transmis (302) périodiquement, et/ou
dans lequel la transmission (302) du message de commande (520) est déclenchée par l'événement selon lequel
les données (504) pour un LCH qui appartient à un LCG deviennent disponibles à une entité MAC du dispositif radio (100 ; 1100 ; 1391 ; 1392 ; 1430), et/ou en conjonction avec au moins l'un parmi :
les données (504) appartiennent à un LCH dont la priorité est supérieure à celle de tout autre LCH contenant des données disponibles dans le même LCG ;
les données (504) appartiennent à un LCH dont la priorité est supérieure à un seuil de priorité configuré ;
aucune donnée n'est disponible pour d'autres LCH dans le même LCG ; et
les données (504) sont de nouvelles données qui n'ont pas été précédemment transmises ou les données (504) ne doivent pas être retransmises dans la transmission (306).

5. Procédé (300) selon l'une quelconque des revendications 1 à 4, dans lequel la transmission (302) du message de commande (520) est déclenchée par au moins l'un des événements suivants :
au moins un LCH ou un LCG contient les données (504) disponibles pour la transmission (306), qui n'ont pas été planifiées avec toute autorisation de planification au cours d'une période de temps configurée, et/ou dans lequel la période de temps configurée est différente pour des LCH différents ou des LCG différents, ou la période de temps configurée est la fonction de la priorité du LCH ou du LCG ;
les données (504) disponibles appartiennent à un LCH dont la priorité est supérieure à un seuil de priorité configuré ;
les données disponibles comprennent de multiples paquets de données dans une file d'attente au niveau du dispositif radio (100 ; 1100 ; 1391 ; 1392 ; 1430) et
le retard de mise en file d'attente (502) d'au moins un des paquets de données dans la file d'attente est supérieur à une période de temps configurée ; et
un temps écoulé entre une dernière transmission (302) du message de commande (520) et une disponibilité des données (504) est supérieur à un seuil configuré.

6. Procédé (300) selon l'une quelconque des revendications 1 à 5, dans lequel la transmission (302) du message de commande (520) est déclenchée par la réception d'une demande du rapport du retard de mise en file d'attente (502) depuis le nœud de réseau (200 ; 1200 ; 1312 ; 1420).

7. Procédé (300) selon l'une quelconque des revendications 1 à 6, comprenant ou initiant en outre : la réception d'une autorisation de planification dynamique pour le message de commande (520), dans lequel le message de commande (520) est transmis (302) sur une ressource radio indiquée dans l'autorisation de planification dynamique, et/ou dans lequel la ressource radio indiquée dans l'autorisation de planification dynamique est sur un canal partagé de liaison montante physique, PUSCH, du RAN.

8. Procédé (300) selon l'une quelconque des revendications 1 à 7, comprenant ou initiant en outre : la réception d'une autorisation configurée, CG, pour le message de commande (520), dans lequel le message de commande (520) est transmis (302) sur une ressource radio autorisée selon la CG, et/ou dans lequel la ressource radio autorisée selon la CG est sur un canal partagé de liaison montante physique, PUSCH, du RAN.

9. Procédé selon la revendication 8, dans lequel la ressource radio autorisée selon la CG est partagée parmi de multiples dispositifs radio (100 ; 1100 ; 1391 ; 1392 ; 1430) desservis par le RAN (1311).

10. Procédé (400), le procédé (400) étant réalisé par un nœud de réseau (200 ; 1200 ; 1312 ; 1420) d'un réseau d'accès radio, RAN (1311), fournissant un accès radio au dispositif radio (100 ; 1100 ; 1391 ; 1392 ; 1430), pour planifier un dispositif radio (100 ; 1100 ; 1391 ; 1392 ; 1430) en fonction d'un retard de mise en file d'attente (502) de données (504) disponibles pour une transmission au niveau du dispositif radio (100 ; 1100 ; 1391 ; 1392 ; 1430), le procédé (400) comprenant ou initiant les étapes suivantes :
la réception (402) d'un message de commande (520) depuis le dispositif radio (100 ; 1100 ; 1391 ; 1392 ; 1430) au niveau du nœud de réseau (200 ; 1200 ; 1312 ; 1420), le message de commande (520) indiquant le retard de mise en file d'attente (502) des données (504) disponibles pour une transmission au niveau du dispositif radio (100 ; 1100 ; 1391 ; 1392 ; 1430), dans lequel la réception (402) du message de commande (520) comprend la réception, depuis le dispositif radio (100 ; 1100 ; 1391 ; 1392 ; 1430), d'une première SR (620) sur une première ressource radio de SR (612) parmi un premier ensemble (610) de ressources radio de SR (612) et d'une deuxième SR (520) sur une deuxième ressource radio de SR (512) parmi un deuxième ensemble (510) de ressources radio de SR (512) ; et
la transmission (404) d'une autorisation de planification (622) en fonction du retard de mise en file d'attente (502) au dispositif radio (100 ; 1100 ; 1391 ; 1392 ; 1430), l'autorisation de planification (622) indiquant une ressource radio (624) pour la transmission des données (504) disponibles.

11. Procédé (400) selon la revendication 10, comprenant en outre les caractéristiques ou étapes selon l'une quelconque des revendications 2 à 22 ou toute caractéristique ou étape leur correspondant.

12. Produit de programme informatique comprenant des parties de code de programme pour réaliser les étapes selon l'une quelconque des revendications 1 à 9 ou des revendications 10 à 11 lorsque le produit de programme informatique est exécuté sur un ou plusieurs dispositifs informatiques (1104 ; 1204), dans lequel ledit produit de programme informatique est adapté pour être stocké sur un support d'enregistrement lisible par ordinateur (1106 ; 1206).

13. Dispositif radio (100 ; 1100 ; 1391 ; 1392 ; 1430), pour rapporter un retard de mise en file d'attente (502) de données (504) disponibles pour une transmission (306) au niveau du dispositif radio (100 ; 1100 ; 1391 ; 1392 ; 1430) vers un nœud de réseau (200 ; 1200 ; 1312 ; 1420) d'un réseau d'accès radio, RAN (1311), fournissant un accès radio au dispositif radio (100 ; 1100 ; 1391 ; 1392 ; 1430), le dispositif radio (100 ; 1100 ; 1391; 1392 ; 1430) comprenant une mémoire (1106 ; 1206) exploitable pour stocker des instructions et une circuiterie de traitement (1104 ; 1204) exploitable pour exécuter les instructions, de sorte que le dispositif radio (100 ; 1100 ; 1391 ; 1392 ; 1430) soit exploitable pour :
transmettre un message de commande (520) depuis le dispositif radio (100 ; 1100 ; 1391 ; 1392 ; 1430) au nœud de réseau (200 ; 1200 ; 1312 ; 1420), le message de commande (520) indiquant le retard de mise en file d'attente (502) des données (504) disponibles pour la transmission (306) au niveau du dispositif radio (100 ; 1100 ; 1391 ; 1392 ; 1430), dans lequel la transmission (302) du message de commande (520) comprend la transmission, depuis le dispositif radio (100 ; 1100 ; 1391 ; 1392 ; 1430), d'une première SR (620) sur une première ressource radio de SR (612) parmi un premier ensemble (610) de ressources radio de SR (612) et d'une deuxième SR (520) sur une deuxième ressource radio de SR (512) parmi un deuxième ensemble (510) de ressources radio de SR (512) ; et
recevoir une autorisation de planification (622) en fonction du retard de mise en file d'attente (502) depuis le nœud de réseau (200 ; 1200 ; 1312 ; 1420), l'autorisation de planification (622) indiquant une ressource radio (624) pour la transmission (306) des données (504) disponibles.

14. Dispositif radio (100 ; 1100 ; 1391 ; 1392 ; 1430) selon la revendication 13, en outre exploitable pour réaliser les étapes selon l'une quelconque des revendications 2 à 9.

15. Nœud de réseau (200 ; 1200 ; 1312 ; 1420) pour planifier un dispositif radio (100 ; 1100 ; 1391 ; 1392 ; 1430) en fonction d'un retard de mise en file d'attente (502) de données (504) disponibles pour une transmission au niveau du dispositif radio (100 ; 1100 ; 1391 ; 1392 ; 1430), le nœud de réseau (200 ; 1200 ; 1312 ; 1420) comprenant une mémoire (1206) exploitable pour stocker des instructions et une circuiterie de traitement exploitable pour exécuter les instructions, de sorte que le nœud de réseau (200 ; 1200 ; 1312 ; 1420) soit exploitable pour :
recevoir un message de commande (520) depuis le dispositif radio (100 ; 1100 ; 1391 ; 1392 ; 1430) au niveau du nœud de réseau (200 ; 1200 ; 1312 ; 1420), le message de commande (520) indiquant le retard de mise en file d'attente (502) des données (504) disponibles pour une transmission au niveau du dispositif radio (100 ; 1100 ; 1391 ; 1392 ; 1430), dans lequel la réception (402) du message de commande (520) comprend la réception, depuis le dispositif radio (100 ; 1100 ; 1391 ; 1392 ; 1430), d'une première SR (620) sur une première ressource radio de SR (612) parmi un premier ensemble (610) de ressources radio de SR (612) et d'une deuxième SR (520) sur une deuxième ressource radio de SR (512) parmi un deuxième ensemble (510) de ressources radio de SR (512) ; et
transmettre une autorisation de planification (622) en fonction du retard de mise en file d'attente (502) au dispositif radio (100 ; 1100 ; 1391 ; 1392 ; 1430), l'autorisation de planification (622) indiquant une ressource radio (624) pour la transmission des données (504) disponibles.

16. Nœud de réseau (200 ; 1200 ; 1312 ; 1420) selon la revendication 15, en outre exploitable pour réaliser l'une quelconque des étapes selon l'une quelconque des revendications 10 et 11.
